# EUROPÄISCHE PATENTSCHRIFT

(11) **EP 3 399 264 B1**
(45) Veröffentlichungstag und Bekanntmachung des Hinweises auf die Patenterteilung: **23.09.2020**
(21) Anmeldenummer: 18169388.8
(22) Anmeldetag: 26.04.2018
(51) Int. Cl.: F28C 1/00, F28F 25/06, F28F 27/00

(54) **SPRÜHFELDSYSTEM FÜR EINEN KÜHLTURM, KÜHLTURM, VERWENDUNG UND VERFAHREN**
COOLING TOWER; SPRAY FIELD SYSTEM FOR A COOLING TOWER, USE AND METHOD
SYSTÈME DE CHAMP DE PULVÉRISATION POUR UNE TOUR DE REFROIDISSEMENT, TOUR DE REFROIDISSEMENT, UTILISATION ET PROCÉDÉ

(30) Priorität: 04.05.2017 EP 17020196
(43) Veröffentlichungstag der Anmeldung: 07.11.2018
(73) Patentinhaber: Aero Solutions SAS, 52100 Saint Dizier (FR)
(72) Erfinder: GRASEMANN, Karsten, 44139 Dortmund (DE)
(74) Vertreter: Von Rohr Patentanwälte Partnerschaft mbB

(56) Entgegenhaltungen:
- CH-A5- 693 043
- CN-A- 106 052 418
- CN-Y- 2 594 750
- FR-A- 476 980
- JP-A- S58 164 998
- US-A1- 2012 061 055
- US-A1- 2013 087 291

## Beschreibung

Die vorliegende Erfindung betrifft grundsätzlich die Konstruktion und den Betrieb von Kühltürmen, vorzugsweise Naturzugkühltürmen. Insbesondere betrifft die vorliegende Erfindung ein Sprühfeldsystem für einen Kühlturm gemäß dem Oberbegriff von Patentanspruch 1, einen Kühlturm mit einem solchen Sprühfeldsystem, eine Verwendung und ein Verfahren gemäß dem Oberbegriff von Patentanspruch 12.

Als Kühlturm werden Anlagen zur Kühlung eines Primärmediums, zumeist (Kühl-) Wasser, unter der Verwendung eines Kühlmediums, zumeist Luft, verstanden.

Unterschieden wird zwischen der sogenannten Trockenkühlung, bei der das Primärmedium keinen direkten Kontakt mit dem Kühlmedium hat, und der sogenannten Nasskühlung, bei der durch den Kontakt des Primärmediums (Wasser) mit dem Kühlmedium (Luft) der Effekt der Verdunstungskühlung benutzt wird bzw. die Verdunstung jedenfalls teilweise die Kühlung bewirkt. Die vorliegende Erfindung betrifft eine solche Nasskühlung, kann jedoch auch in Hybrid-Systemen, bei denen die Trockenkühlung mit der Nasskühlung kombiniert wird, eingesetzt werden.

Weiter wird grundsätzlich zwischen Gegenstromkühltürmen und Kreuzstromkühltürmen unterschieden, wobei in Gegenstromkühltürmen das Primärmedium (Wasser) und das Kühlmedium (Luft) in entgegengesetzte Richtungen strömen, wobei zumeist die Luft in Gebrauchslage nach oben strömt, während das Wasser vorrangig nach unten, also in Richtung der Gravitation, rieselt bzw. strömt.

Die Alternative stellen sogenannte Kreuzstromkühltürme dar, bei denen das Primärmedium und das Kühlmedium quer zueinander strömen. Insbesondere ist vorgesehen, dass das Primärmedium (Wasser) von oben nach unten, also in Richtung der Gravitationskraft läuft, strömt und/oder tropft und das Kühlmedium (Luft) quer oder senkrecht zur Strömungsrichtung des Primärmediums strömt, in Gebrauchslage bevorzugt von einer Seite zu einer gegenüberliegenden Seite in zumindest im Wesentlichen horizontaler Richtung.

Auch wenn die vorliegende Erfindung primär anhand von Gegenstromkühltürmen erläutert wird und in diesem Zusammenhang auch besonders vorteilhaft ist, ist eine Anwendung im Zusammenhang mit Kreuzstromkühltürmen ebenfalls möglich. Insbesondere betrifft die vorliegende Erfindung den Aufbau und Betrieb von Naturzug-Kühltürmen, bei denen die in den Kühlturm durch das Primärmedium (Wasser) eingetragene Wärmeenergie verwendet wird, um das Kühlmedium (Luft) über den Kamineffekt zu fördern. Hierbei wird ausgenutzt, dass warme Luft eine geringere Dichte als kalte Luft aufweist und folglich innerhalb des Naturzug-Kühlturms nach oben steigt und den Kühlturm an einer obenliegenden Öffnung verlässt, während auf einer Unterseite (zumeist seitlich und/oder im Fußbereich des Kühlturms) Umgebungsluft in den Naturzug-Kühlturm nachströmt.

Im Folgenden wird die vorliegende Erfindung stets anhand solcher Naturzug-Kühlturme nach dem Nasskühlungsprinzip erläutert. Die Erfindung kann jedoch grundsätzlich auch für andere Kühlturm-Konzepte, Zellen-Kühltürme oder Hybrid-Kühltürme nach dem Nasskühlungsprinzip eingesetzt werden.

Das Primärmedium wird vorzugsweise versprüht. Hierdurch kann einerseits eine große Wasseroberfläche erreicht werden, andererseits kann das Primärmedium zumindest im Wesentlichen gleichmäßig verteilt werden. Das Primärmedium ist besonders bevorzugt Kühlwasser, optional mit Zusatzstoffen oder zusatzstofffrei. Alternativ können andere Kältemittel wie Ammoniak, CO₂ und/oder Kohlenwasserstoffe als Primärmedium eingesetzt werden, insbesondere in abgeschlossenen bzw. gegenüber der Umwelt getrennten Systemen und/oder bei Trockenkühlung. Der Einsatz der Erfindung bei Trockenkühlung ist also nicht ausgeschlossen.

Grundsätzlich bekannt ist der Einsatz von Sprühdüsen, sogenannten Sprayern, zum Verregnen bzw. Versprühen des Primärmediums. Diese sind entlang von Verteilungsrohren angeordnet, wobei durch die Verteilungsrohre das Primärmedium geleitet und durch die Sprühdüsen in Form eines Sprühnebels abgegeben wird.

Unterhalb der Sprühdüsen können sich sogenannte Füllkörper, auch Kühlpakete genannt, befinden. Hierbei handelt es sich um Strukturen, die dazu ausgebildet sind, verregnetes bzw. versprühtes Primärmedium (Warmwasser) auf ihrer Oberfläche zu verteilen, damit für eine effektive und effiziente Kühlung eine große Wasseroberfläche erzeugt wird.

Bekannte Füllkörper werden entweder durch eine Gitterkonstruktion oder durch eine Aneinanderreihung von Folien zur Erzeugung von Strömungskanälen gebildet. Hier gibt es jedoch auch andere Lösungsansätze. Die Füllkörper werden beregnet und auf diese Weise mit Primärmedium benetzt, wobei das Primärmedium aufgrund der Schwerkraft nach unten entlang der Strukturen der Füllkörper fließt und an deren unteren Ende abtropft.

Das Kühlmedium strömt in entgegengesetzte Richtung oder quer zur Flussrichtung des Primärmediums durch die Füllkörper. Bei Naturzug-Kühltürmen wird das Kühlmedium hierbei aufgewärmt und steigt durch den Kamineffekt im Inneren des Kühlturms (Prozessraum) nach oben und entweicht auf der Oberseite.

Um den Verlust von Primärmedium zu reduzieren, werden mitgerissene Tropfen abgefangen. Hierzu sind in Gebrauchslage oberhalb der Sprühdüsen sogenannte Tropfenabscheider vorgesehen, die beispielsweise durch Strömungsumlenkung dazu ausgebildet sind, einen Niederschlag von mitgerissenen Tropfen herbeizuführen.

Sowohl Tropfenabscheider als auch Füllkörper gehören zu den sogenannten Kühlturmeinbauten. Die vorliegende Erfindung betrifft hingegen vorrangig das Versprühen bzw. Verregnen von Primärmedium, optional in Kombination mit den Kühlturmeinbauten.

Aus der EP 2 598 822 A2 ist eine Kühlturm-Wasserverteilung bekannt. Sprühdüsen sind hierbei äquidistant an einer gemeinsamen Wasserverteilung vorgesehen. Zum Betrieb des Kühlturms wird die Wasserverteilung mit Kühlwasser beschickt und das Kühlwasser über Sprühdüsen verregnet.

Kühltürme unterliegen im Verlauf eines Jahres unterschiedlichen Wetter- und Umwelteinflüssen. Diese mindern die thermodynamische Leistungsfähigkeit eines Kühlturms und somit die Leistungsausbeute des Kraftwerks oder des Prozesses, deren Primärmedium durch den Kühlturm gekühlt wird, erheblich. Um den Umwelteinflüssen entgegenzuwirken, kann eine Wasserverteilung in mehreren Sprühfeldern (z.B. Winterbetrieb 50%, Winterbetrieb 100%, Frostschutzumlaufkanal, etc.) bautechnisch vorgesehen sein.

Ein Sprühfeld weist hierbei vorzugsweise eine Zuleitung, insbesondere in Form eines oder mehrerer Rohre, auf, durch die die Sprühanordnungen mit dem Primärmedium (Kühlwasser) beschickt werden können.

Die Zuleitung ist hierbei dazu ausgebildet, eine Vielzahl von Sprühanordnungen gleichzeitig mit dem Primärmedium zu versorgen. Hierbei sind Sprühanordnungen eines Sprühfelds vorzugsweise untrennbar fluidisch untereinander verbunden. Dies wird in der Praxis dadurch realisiert, dass die Zuleitung durch ein Rohrsystem gebildet ist, an das alle Sprühanordnungen des Sprühfelds (unterbrechungsfrei) fluidisch angebunden sind.

Es ist vorzugsweise möglich, ein gesamtes Sprühfeld durch einen Schieber oder ein Ventil abzusperren und auf diese Weise ein Verregnen des Primärmediums durch das gesamte Sprühfeld zu unterbinden, die Sprühanordnungen untereinander sind bzw. bleiben jedoch untrennbar untereinander fluidisch verbunden.

Hierdurch ist es möglich, ein vordefiniertes Sprühfeld insgesamt entweder mit Wasser zu beaufschlagen oder stillzulegen. Eine Neudefinition von Sprühfeldern sowie eine Variation der Durchflussmenge ist nicht möglich.

Ein "Sprühfeldsystem" im Sinne der vorliegenden Erfindung ist hierbei ein System, das ein oder mehrere derartige Sprühfelder aufweist.

Die DE 2 830 666 A1 betrifft einen Zellenkühlturm im sogenannten Winterbetrieb, bei dem die thermodynamischen Eigenschaften des Kühlturms mittels verstellbarer Jalousien im Ansaugtrakt variiert werden.

Die bekannten Maßnahmen zur Anpassung des Kühlturmverhaltens führen jedoch nicht dazu, dass die Eigenschaften des Kühlturms den jeweiligen, insbesondere klimatischen Randbedingungen derart angepasst werden kann, dass stets ein hoher Wirkungsgrad erreicht wird.

Die US 2012/0061055 A1 betrifft einen Wärmetauscher für einen Kühlturm mit mehreren Verteilerrohren und Ventilen gemäß dem Oberbegriff des Anspruchs 1.

Die JP S58 164998 A betrifft einen Kühlturm mit mehreren Zuleitungen, denen jeweils ein Ventil zugeordnet ist. Die Steuerung der Ventile erfolgt derart, dass beim Reduzieren der Flussrate des versprühten Wassers sukzessive die Ventile geschlossen werden, sodass der Rohrdruck in den anderen Rohren nicht absinkt und somit eine gleichmäßige Wässerung erfolgt.

Die CN 2 594 750 Y betrifft einen Kühlturm mit mehreren Sprühköpfen, die jeweils ein Ventil aufweisen.

Die CN 106 052 418 A betrifft einen Kühlturm mit mehreren Sprühköpfen, die jeweils ein Ventil aufweisen. Der Betriebszustand des Kühlturms kann in Abhänaiakeit von klimatischen Bedingungen der Umgebung und der Temperatur eines zu kühlenden Fluids automatisch angepasst werden.

Die CH 693 043 A5 betrifft eine Einrichtung zur Erhöhung der Kühlleistung eines Wärmetauschers mit einer Sprühvorrichtung zum intermittierenden Aufbringen von Flüssigkeit auf die Oberfläche des Wärmetauschers. Die Sprühvorrichtung ist durch eine Mehrzahl von individuell steuerbaren Düsen gebildet, denen ein Modular-Magnetventil-System zugeordnet ist. Das Modular-Magnetventil-System ist von einem Regler gesteuert, der mit einem Temperaturfühler für die Austrittstemperatur des Wassers aus dem Wärmetauscher verbunden ist.

Aufgabe der vorliegenden Erfindung ist es vor diesem Hintergrund, ein Sprühfeldsystem für einen Kühlturm, einen Kühlturm, eine Verwendung und ein Verfahren anzugeben, wodurch die Effizienz und/oder Effektivität von Kühltürmen oder Anlagen mit solchen Kühltürmern auch unter wechselnden, insbesondere klimatischen, Randbedingungen verbessert werden kann/können.

Diese Aufgabe wird durch ein Sprühfeldsystem gemäß Anspruch 1, einen Kühlturm gemäß Anspruch 11 oder ein Verfahren gemäß Anspruch 12 gelöst. Vorteilhafte Weiterbildungen sind Gegenstand der Unteransprüche.

Die vorliegende Erfindung betrifft Verbesserungen in Zusammenhang mit dem Versprühen und/oder Verregnen von Primärmedium durch Sprühanordnungen in Kühltürmen mittels eines vorschlagsgemäßen Sprühfeldsystems.

Ein Sprühfeldsystem im Sinne der vorliegenden Erfindung ist ein System zum verregnen und/oder vernebeln von Primärmedium (Kühlwasser). Hierzu weist das das Sprühfeldsystem ein oder mehrere Sprühfelder auf oder bildet diese.

Die Sprühanordnungen des vorschlagsgemäßen Sprühfeldsystems sind dazu ausgebildet, Primärmedium zu versprühen bzw. zu verregnen. Die Sprühanordnungen weisen hierzu jeweils eine oder mehrere Sprühdüsen oder sonstige Einrichtungen zur Erzeugung von Tropfen bzw. eines Aerosols aus dem Primärmedium auf oder sind hierdurch gebildet.

Mehrere Sprühanordnungen des vorschlagsgemäßen Sprühfeldsystems sind vorzugsweise in einem gemeinsamen Sprühfeld angeordnet oder anordenbar. Das Sprühfeldsystem kann jedoch auch mehrere Sprühfelder aufweisen, in denen jeweils mehrere Sprühanordnungen vorgesehen sind. Das vorschlagsgemäße Sprühfeldsystem weist also jedenfalls mehrere Sprühanordnungen auf, die in einem oder mehreren Sprühfeldern vorgesehen sind oder ein oder mehrere Sprühfelder bilden.

Die Sprühanordnungen des (jeweiligen) Sprühfelds sind mit einer gemeinsamen, unterbrechungsfreien bzw. betriebsmäßig ununterbrechbaren Zuleitung mit Primärmedium (Kühlwasser) versorgbar. Diese Zuleitung bildet vorzugsweise, aber nicht zwingend einen Teil des Sprühfeldsystems.

Die in dem vorschlagsgemäßen Sprühfeldsystem bzw. einem Sprühfeld des vorschlagsgemäßen Sprühfeldsystems vorgesehen Sprühanordnungen sind also vorzugsweise durch die unterbrechungsfreie bzw. betriebsmäßig ununterbrechbare Zuleitung untereinander verbunden oder verbindbar und gemeinsam mit Primärmedium (Kühlwasser) versorgbar.

Bevorzugt weist die jeweilige Sprühanordnung eine Kombination einer Sprühdüse mit einem Adapter zur fluidischen Anbindung der Sprühdüse an die Zuleitung auf oder ist hierdurch gebildet. Die Sprühanordnungen können mit, mittels oder ohne den Adapter fluidisch mit der Zuleitung verbunden sein oder werden, beispielsweise form- und/oder kraftschlüssig, durch Schrauben, Klemmen oder auf sonstige Weise.

Es können eine oder mehrere Dichtungen vorgesehen sein, um ein Austreten von Primärmedium an Übergängen der Zuleitung zu oder im Verlauf der Sprühanordnungen zu vermeiden. Die Sprühanordnungen sind also beispielsweise durch Dichtungen vorzugsweise so montiert, dass eine zur Umgebung abgedichtete Anbindung an die Zuleitung erfolgt, sodass Austritt von Primärmedium an Schnittstellen zwischen der Zuleitung und den Sprühanordnungen verhindert wird.

In einem vorschlagsgemäßen Kühlturm sind Sprühanordnungen vorzugsweise in einer zumindest im Wesentlichen horizontalen Sprühebene angeordnet. Das vorschlagsgemäße Sprühfeldsystem kann entsprechend Sprühanordnungen in einem oder mehreren Sprühfeldern aufweisen, die eine Sprühebene in einem oder zum Einsatz in einem Kühlturm oder einen Teil hiervon bilden.

Es ist nicht ausgeschlossen, dass zusätzlich zu dem vorschlagsgemäßen Sprühfeldsystem weitere Sprühanordnungen oder Sprühfelder vorgesehen sind. Bevorzugt bilden jedoch alle Sprühanordnungen eines Kühlturms bzw. einer Sprühebene Teil des vorschlagsgemäßen Sprühfeldsystems. Mit anderen Worten umfasst das vorschlagsgemäße Sprühfeldsystem vorzugsweise sämtliche Sprühanordnungen einer Sprühebene und/oder eines Kühlturms.

Ein erster Aspekt der vorliegenden Erfindung betrifft ein solches Sprühfeldsystem für einen Kühlturm, wobei das Sprühfeldsystem eine Vielzahl von Sprühanordnungen zur Abgabe von Primärmedium, insbesondere Kühlwasser, aufweist. Ferner weist das Sprühfeldsystem eine Zuleitung zur Versorgung der Sprühanordnungen mit dem Primärmedium auf. Die Zuleitung ist hierbei jedenfalls pro Sprühfeld vorzugsweise unterbrechungsfrei bzw. betriebsmäßig ununterbrechbar, sodass mittels der Zuleitung alle Sprühanordnungen des Sprühfelds des Sprühfeldsystems (bevorzugt zwingend) gleichzeitig mit dem Primärmedium versorgt werden oder versorgbar sind.

Gemäß dem vorliegenden Aspekt ist vorgesehen, dass die Sprühanordnungen jeweils ein Stellglied zur Steuerung der Abgabe des Primärmediums aufweisen, wodurch der durch die Sprühanordnungen abgebbare Volumenstrom an Primärmedium (Kühlwasser) für die jeweilige Sprühanordnung individuell einstellbar ist. Als abgebbarer Volumenstrom wird vorzugsweise das Primärmedium-Volumen, insbesondere Kühlwasser-Volumen, bezeichnet, das pro Zeiteinheit durch die jeweilige Sprühanordnung abgegeben wird oder abgebbar ist, insbesondere bei einem vorgegebenen oder vorgebbaren Zuleitungsdruck. Eine Querschnittsänderung einer das Primärmedium führenden Passage von der Zuleitung zu der oder den jeweilige(n) Sprühdüsen kann hierbei dazu verwendet werden, den abgebbaren Volumenstrom zu ändern, insbesondere bei im Übrigen gleichbleibenden Randbedingungen (wie dem Primärmedium-Druck in der Zuleitung) also das abgebbare bzw. versprühbare Primärmedium-Volumen pro Zeiteinheit zu variieren.

Mit anderen Worten ist vorgesehen, dass das Sprühfeld des Sprühfeldsystems mittels der Zuleitung mit dem Primärmedium beschickt oder versorgt wird bzw. beschickbar oder versorgbar ist, die jeweiligen Sprühanordnungen hingegen individuell einstellbar sind, und zwar derart, dass die Sprühanordnungen getrennt voneinander angestellt, abgestellt und/oder gedrosselt werden können, sodass ein maximaler, kein und/oder lediglich ein gedrosselter Volumenstrom an Primärmedium über die jeweilige der Sprühanordnungen verregnet wird. Hierzu kann eine Passage zwischen Zuleitung und Sprühdüse(n) vollständig geöffnet, blockiert bzw. verschlossen und/oder im Öffnungsquerschnitt verringert sein oder werden. Die Sprühanordnungen sind hierbei vorzugsweise getrennt voneinander unterschiedlich oder gleich einstellbar.

Das Stellglied ist vorzugsweise dazu ausgebildet, einen Öffnungsquerschnitt bzw. hydraulischen Querschnitt, durch den das Primärmedium hindurch abgegeben wird, zu variieren. Auf diese Weise kann das Stellglied, insbesondere (auch) bei vorgegebenem bzw. gleichbleibendem Druck des Primärmediums, den abgebbaren oder abzugebenden Volumenstrom am Primärmedium beeinflussen, insbesondere steuern. Das (jeweilige) Stellglied kann einen Schieber, eine Klappe, ein Ventil oder dergleichen zur Änderung des abgebbaren Volumenstroms bzw. des Öffnungsquerschnitts aufweisen.

Durch das Stellglied ist es möglich, einzelne Sprühanordnungen abzustellen, sodass durch solche Sprühanordnungen kein Primärmedium abgegeben bzw. verregnet wird, auch wenn diese mittels der Zuleitung mit Primärmedium versorgt werden. Hierzu kann das Stellglied den Öffnungsquerschnitt zumindest im Wesentlichen schließen bzw. eine Fluidverbindung zwischen der Zuleitung und einer Abgabeöffnung der Sprühanordnung(en) blockieren, sodass eine Abgabemenge pro Zeit (Volumenstrom) an Primärmedium minimiert bzw. eine Abgabe verhindert wird. Alternativ oder zusätzlich ist es möglich, einzelne Sprühanordnungen zu drosseln, sodass durch solche Sprühanordnungen im Vergleich mit einem maximal abgebbaren nur ein geringerer Volumenstrom an Primärmedium abgegeben bzw. verregnet wird, vorzugsweise auch wenn mittels der Zuleitung die Versorgung mit Primärmedium den maximalen Volumenstrom ermöglichen würde. Hierzu kann das Stellglied den Öffnungsquerschnitt (lediglich) teilweise schließen bzw. eine Fluidverbindung zwischen der Zuleitung und einer Abgabeöffnung der Sprühanordnung(en) teilweise blockieren, sodass eine Abgabemenge pro Zeit (Volumenstrom) an Primärmedium verringert wird gegenüber einer maximal möglichen Abgabemenge pro Zeit (Volumenstrom).

Alternativ oder zusätzlich ist es möglich, einzelne Sprühanordnungen anzustellen (aufzuregein), sodass durch solche Sprühanordnungen der maximal abgebbare Volumenstrom an Primärmedium abgegeben bzw. verregnet wird. Hierzu kann das Stellglied den Öffnungsquerschnitt maximieren bzw. eine Fluidverbindung zwischen der Zuleitung und einer Abgabeöffnung der Sprühanordnung(en) befindet sich in vollständiger Offenstellung, sodass eine Abgabemenge pro Zeit (Volumenstrom) an Primärmedium maximal wird oder ist.

Das Stellglied weist vorzugsweise einen Aktuator zur bevorzugt elektrischen bzw. eletromechanischen Verstellung auf. Mit dem Aktuator kann der Schieber, die Klappe, das Ventil oder allgemein ein Stellmittel verstellt werden, sodass der Öffnungsquerschnitt bzw. hydraulische Querschnitt, durch den das Primärmedium hindurch abgegeben wird bzw. zwischen Zuleitung und Sprühdüse(n) variiert wird.

Das Stellglied kann einen Notlaufmodus bzw. Notzustand aufweisen, in dem das Stellglied den Volumenstrom vollständig freigibt und/oder blockiert. Dieser Notlaufmodus ist oder wird vorzugsweise automatisch aktiviert, wenn der Aktuator bzw. das Stellglied nicht mit (elektrischer) Energie versorgt ist/wird. Es werden also Notzustände "voll geöffnet" oder "voll geschlossen" bei einem Ausfall der Stromversorgung mechanisch realisiert. Besonders bevorzugt öffnet das Stellglied bei Ausfall der Stromversorgung die Passage zwischen Zuleitung und Sprühkopf vollständig automatisch mechanisch. Auf diese Weise bleibt der Kühlturm im herkömmlichen Betriebsmodus vollständig funktionsfähig.

In vorteilhafter Weise können die Sprühanordnungen mittels der jeweiligen Stellglieder also aktiviert, deaktiviert und/oder gedrosselt werden, sodass bestimmte Sprühanordnungen des Sprühfeldsystems Primärmedium verregnen, während andere Sprühanordnungen des Sprühfeldsystems kein oder nur eine verringerte Menge Primärmedium verregnen. Auf diese Weise ist es möglich, nicht nur ganze Sprühfelder bedarfsweise anzuschalten oder abzuschalten, sondern auch die durch ein Sprühfeld insgesamt, also durch alle Sprühanordnungen des Sprühfeldsystemes, erzeugte Sprühcharakteristik zu variieren.

Auf diese Weise ist es in vorteilhafter Weise möglich, einen reduzierten Gesamtvolumenstrom an Primärmedium (also ein durch alle Sprühanordnungen zusammen genommen pro Zeiteinheit abgebbare Menge / abgebbares Volumen an Primärmedium) gleichmäßig über die Kühlturm-Querschnittsfläche zu verteilen oder in Bereichen, die beispielsweise durch Windverhältnisse oder sonstige wetterbezogene Phänomene beeinträchtigt sind, die Abgabe bzw. Beregnung mit Primärmedium zu drosseln oder zu unterbinden.

Der Volumenstrom an Primärmedium, also das Volumen an Primärmedium, das pro Zeiteinheit insgesamt oder pro Sprühanordnung verregnet wird, kann hierbei gesteuert werden, ohne den Druck des Primärmediums in der Zuleitung zu ändern. Dies ermöglicht eine Steuerung, ohne den Verregnungsprozess zu beeinträchtigen.

Die vorliegende Erfindung ermöglicht es in vorteilhafter Weise, die Verteilung des Primärmediums über die Sprühanordnungen vollautomatisch den äußeren Wetterbedingungen und/oder den thermodynamischen Bedingungen im Prozessraum des Kühlturms anzupassen. Dies ermöglicht eine effiziente und effektive Betriebsweise des Kühlturms und durch die verbesserte und/oder schnellere Steuerbarkeit der Kühlleistung auch die Verbesserung einer Gesamtanlage, von der das Primärmedium stammt und an die das Primärmedium vorzugsweise auch zurückgeführt wird. Die vorliegende Erfindung ermöglicht es also beispielsweise, die Effizienz von Kraftwerken zur Erzeugung elektrischer Energie zu verbessern.

Um die Verteilung des Primärmediums (Kühlwasser/Warmwasser) dynamisch anpassen zu können, wird vorzugsweise der Wasserdurchfluss jeder einzelnen Sprühanordnung gesteuert. Die Sprühanordnungen können einzeln angesprochen und auf einen bestimmten bzw. variablen Durchfluss eingestellt werden.

Vorzugsweise werden Messwerte zu den lokalen Wasser- und Luftzuständen (Temperatur, Luftfeuchte, Druck, ...) aufgenommen. Auf Basis dieser Messwerte können nun dynamisch einzelne Sprühanordnungen angesteuert sowie Sprühfelder bzw. Sprühzonen - im Folgenden auch nur "Zone" genannt - innerhalb von Sprühfeldern definiert und deren Volumenstrom an abgegebenen oder abzugebenen Primärmedium (Wasserdurchfluss) variabel festgelegt werden. Somit kann flexibel auf Umwelteinflüsse wie Wind, Inversionswetterlagen und Winterbetrieb reagiert und die thermodynamische Leistung des Kühlturms gesteigert werden. Weiterhin entfallen beim Neubau von Kühltürmen aufwändige Prozessplanungen und Betonbauten für den klassischen Winterbetrieb.

Das Sprühfeldsystem weist vorzugsweise eine Steuervorrichtung zur individuellen Steuerung und/oder Regelung der der jeweiligen Sprühanordnungen bzw. der individuellen Steuerung der Stellglieder der jeweiligen Sprühanordnungen auf. Auf diese Weise kann der durch die jeweilige Sprühanordnung abzugebende oder abgebbare Volumenstrom an Primärmedium automatisch eingestellt bzw. geregelt werden.

Die Steuervorrichtung ist vorzugsweise dazu ausgebildet, die Sprühanordnungen bzw. Stellglieder der jeweiligen Sprühanordnungen auf Basis eines Istwerts und/oder auf einen Sollwert zu regeln.

Die Sprühanordnungen bzw. Stellglieder können hierbei jeweils einzeln und unabhängig voneinander oder in Gruppen zusammengefasst gesteuert werden.

Die Regelung basiert grundsätzlich auf einem Vergleich des Istwerts mit dem Sollwert. Aus dem Vergleich, insbesondere einer Differenz von Istwert zu Sollwert, wird eine Steuergröße ermittelt oder abgeleitet, mit der die Sprühanordnungen bzw. Stellglieder steuerbar sind oder gesteuert werden. Die Sprühanordnungen bzw. Stellglieder werden dann derart eingestellt oder sind einstellbar, dass der Unterschied bzw. die Differenz zwischen Istwert und Sollwert verringert oder eliminiert wird.

Die Sprühanordnungen bzw. Stellglieder können bei der Regelung individuell gesteuert bzw. eingestellt werden, wodurch die Regelung die Aktivierung, Abschaltung und/oder Drosselung bestimmter der Sprühanordnungen bewirkt. So ist es möglich, dass zur Regelung einzelne Sprühanordnungen abgestellt oder gedrosselt und andere aktiviert werden.

Die Regelung kann dadurch erfolgen, dass Sprühbilder ausgewählt, bestimmt, aktiviert und/oder variiert werden. Hierzu können bestimmte der Sprühanordnungen bzw. Stellglieder (insbesondere eines Sprühfelds, des Sprühfeldsystems bzw. der Sprühebene) aktiviert, deaktiviert und/oder gedrosselt werden, sodass sich ein Sprühbild ergibt oder geändert wird, sodass der Istwert dem Sollwert angenähert wird.

Es können einzelne oder Gruppen von Sprühanordnungen bzw. Stellgliedern individuell in Abhängigkeit von Parametern bzw. Istwerten auf Sollwerte geregelt werden, wobei die Parameter bzw. Istwerte für die einzelnen oder Gruppen von Sprühanordnungen bzw. Stellgliedern individuell bzw. spezifisch sind.

So können Eigenschaften des durch die jeweilige Sprühanordnung bzw. Gruppe dieser abgegebenen Primärmediums als Istwert bestimmt werden, beispielsweise die Temperatur oder der Volumenstrom, insbesondere durch Messung des Massendruchflusses. Auf diese Weise kann das durch einzelne oder Gruppen von Sprühanordnungen abgebbare oder abgegebene Volumen oder die abgebbare Energiemenge auf einen Sollwert geregelt werden.

Ein Sollwert für das Gesamtsystem, also für das Sprühfeldsystem, die Sprühebene oder den Kühlturm, kann dadurch erreicht werden, dass mit oder aus dem Sollwert für das Gesamtsystem Sollwerte für Regelkreise gebildet werden, wodurch eine Regelung mit den Stellgliedern realisiert wird. Es kann also eine mehrstufige bzw. verschachtelte Regelung vorgesehen sein. Insbesondere wird aus dem Sollwert für das Gesamtsystem ein Sprühbild abgeleitet, das wiederum durch eine Regelung der Stellglieder realisiert wird.

Beispielsweise kann der Sollwert für das Gesamtsystem, z.B. eine Kühlleistung, vorgegeben sein oder werden. Auf Basis dieses Sollwerts für das Gesamtsystem kann eine Vorgabe für die Sprühanordnungen bestimmt oder gebildet werden. Dies kann ein Sprühbild oder Muster zu aktivierender, deaktivierender und/oder gedrosselter Sprühanordnungen sein. Ein solches Sprühbild bzw. Muster kann aus Vorgaben für die Stellglieder bestehen oder solche Vorgaben aufweisen. Auf Basis der Vorgaben werden die Stellglieder vorzugsweise eingestellt.

Diese Einstellung der Stellglieder kann als Steuerung realisiert sein. Alternativ oder zusätzlich werden die Vorgaben den jeweiligen Sprühanordnungen oder Gruppen hiervon als Sollwerte, beispielsweise abzugebende Volumenströme, zugewiesen, um die Stellglieder mittels einer Regelung bzw. eines Regelkreises einzustellen. Hierbei können Istwerte den Vorgaben bzw. Sollwerten durch Regelung der Sprühanordnungen bzw. Stellglieder angenähert werden. Insbesondere werden Istwerte von den jeweiligen Sprühanordnungen zugeordneter Sensoren mit den Vorgaben als Sollwerte verglichen und die Stellglieder werden auf Basis dieses Vergleichs (der Differenz von Ist- und Sollwert) eingestellt.

Die Steuerung bzw. Regelung erfolgt bevorzugt derart, dass im Ergebnis das Sprühbild oder Muster zu aktivierender, deaktivierender und/oder gedrosselter Sprühanordnungen bzw. der Sollwert für das Gesamtsystem erreicht wird.

Bevorzugt werden die Sprühanordnungen (eines Sprühfelds, des Sprühfeldsysteme und/oder der Sprühebene) in einem regelmäßigen Muster aktiviert und/oder deaktiviert und/oder gedrosselt. Beispielsweise wird ausgehend von einer Referenzposition jede zweite, dritte oder vierte Sprühanordnung deaktiviert oder aktiviert oder gedrosselt. Hierdurch kann eine homogene und ausreichend feine Verregnung und/oder eine feinschrittige oder kontinuierliche Variation des abgegebenen oder abgebbaren Gesamtvolumenstroms an Primärmedium (Kühlwasser) erreicht werden.

Beispielsweise wird eine aktuelle Kühlleistung als Istwert bestimmt und mit einem Sollwert für die Kühlleistung verglichen. Auf Basis der Differenz kann

Die Steuervorrichtung ist vorzugsweise dazu ausgebildet, Messdaten zu ermitteln oder zu empfangen und die Stellglieder der Sprühanordnungen auf Basis der Messdaten individuell zu steuern.

Besonders bevorzugt handelt es sich bei den Messdaten um wetterbezogene Messdaten. Wetterbezogene Messdaten enthalten Informationen, die zum Wettergeschehen im geografischen Bereich des Sprühfeldsystems korrespondieren.

Die Messdaten sind vorzugsweise aktuell, also zumindest im Wesentlichen von dem Zeitpunkt, zu dem das Sprühfeldsystem bzw. der Kühlturm betrieben werden. Alternativ oder zusätzlich können die Messdaten jedoch auch historisch sein oder historische Werte berücksichtigen.

Alternativ oder zusätzlich können die Messdaten eine Wetterprognose aufweisen und/oder die Steuervorrichtung kann mit den Messdaten eine Wetterprognose generieren. Mit der Wetterprognose kann das Sprühfeldsystem bereits im Vorfeld einer möglichen Wetteränderung automatisch adaptiert werden, beispielsweise durch Änderung des Sprühbilds und/oder des (Gesamt-) Volumenstroms an Primärmedium, der über das Sprühfeldsystem verregnet wird.

Die Messdaten weisen vorzugsweise eine Außentemperatur auf. Eine Außentemperatur im Sinne der vorliegenden Erfindung ist hierbei vorzugsweise eine durch das Sprühfeldsystem bzw. den Kühlturm zumindest im Wesentlichen unbeeinflusste Umgebungstemperatur im unmittelbaren Umfeld des Kühlturms bzw. des Sprühfeldsystems. Die Außentemperatur und/oder (relative) Luftfeuchtigkeit ist vorzugsweise diejenige in oder im Bereich der Einlassöffnungen für das Kühlmedium (Luft).

Anhand der Außentemperatur kann die Steuervorrichtung eine Kühlleistung bestimmen und durch Steuerung der Stellglieder die Kühlleistung anpassen, beispielsweise indem eine Außentemperaturänderung derart kompensiert wird, dass die Kühlleistung konstant gehalten wird.

Alternativ oder zusätzlich weisen die Messdaten eine Luftfeuchtigkeit auf, insbesondere relative Luftfeuchtigkeit. Bei der Luftfeuchtigkeit handelt es sich vorzugsweise um eine Umgebungs-Luftfeuchtigkeit im geografischen Umfeld zumindest im Wesentlichen ohne Beeinflussung durch das Sprühfeldsystem bzw. den Kühlturm. Die (relative) Luftfeuchtigkeit ist vorzugsweise diejenige in oder im Bereich der Einlassöffnungen für das Kühlmedium (Luft).

Auf Basis der Luftfeuchtigkeit kann die zu erwartende Verdunstungsrate und/oder Verdunstungsmenge an Primärmedium berechnet werden bzw. der Einfluss der Luftfeuchtigkeit auf die Kühlleistung. Mit dem Ergebnis kann die Steuervorrichtung die Stellglieder derart steuern, dass eine Änderung der Luftfeuchtigkeit kompensiert wird, beispielsweise sodass die Kühlleistung konstant bleibt.

Alternativ oder zusätzlich weisen die Messdaten einen Luftdruck auf oder werden hierdurch gebildet. Bei dem Luftdruck handelt es sich vorzugsweise um einen Luftdruck an der Erdoberfläche, einen Luftdruck im Bereich der Einlassöffnungen für Kühlmedium (Luft) des Kühlturms und/oder um den Luftdruck in oder auf Höhe au-ßerhalb der Auslassöffnung des Kühlturms für das Kühlmedium. Alternativ oder zusätzlich weisen die Messdaten eine Luftdruckdifferenz zwischen dem Luftdruck auf Höhe der Einlassöffnungen und der Auslassöffnung für Kühlmedium (Luft) des Kühlturms auf. Hierdurch können Inversionswetterlagen detektiert und bei der Steuerung berücksichtigt werden.

Die Messdaten können alternativ oder zusätzlich eine Windgeschwindigkeit und/oder eine Windrichtung aufweisen oder hierdurch gebildet sein. Hierbei handelt es sich um Messdaten, die zu Luftbewegungen im Umfeld bzw. mit Wirkung auf den Kühlturm bzw. das Sprühfeldsystem ermittelt werden oder ermittelt werden können. Vorzugsweise wird die Inklination des Winds gemessen bzw. die Messdaten umfassen Werte, die die Inklination repräsentieren. Als Inklination wird die Neigung der Windrichtung zur Erdoberfläche bezeichnet. Abhängig von einer Windgeschwindigkeit und/oder einer Windrichtung kann die Thermodynamik im Prozessraum des Kühlturms durch den Wind asymmetrisch beeinflusst werden, was das Steuergerät in der Steuerung der Sprühanordnungen berücksichtigen oder komprimieren kann.

Die Messdaten können alternativ oder zusätzlich andere wetterbezogene Phänomene berücksichtigen oder wiederspiegeln. Alternativ oder zusätzlich können die Messdaten Prozesseigenschaften bzw. thermodynamische Eigenschaften des Prozessraums, Eigenschaften des Primärmediums, Eigenschaften des Kühlmediums und/oder Eigenschaften einer dem Kühlturm bzw. Sprühfeldsystem zugeordneten Anlage repräsentieren.

Die Steuervorrichtung ist vorzugsweise dazu ausgebildet, auf Basis der Messdaten eine Untermenge der Sprühanordnungen zu selektieren. Die Steuervorrichtung kann hierzu die Messdaten analysieren und aufgrund des Analyseergebnisses Sprühanordnungen identifizieren und, vorzugsweise, auswählen.

Die Steuervorrichtung kann dann die selektierte Untermenge an Sprühanordnungen gleichartig steuern, beispielsweise indem der abgebbare oder abzugebende Volumenstrom bzw. die hierzu korrespondierende Stellung der Stellglieder der Sprühanordnungen gleichartig eingestellt werden.

Alternativ oder zusätzlich können die Sprühanordnungen der selektierten Untermenge auch in anderer Weise gesteuert werden, beispielsweise indem innerhalb der Untermenge ein Gefälle erzeugt wird, an einer Position der Untermenge also ein Stellglied einer Sprühanordnung für einen bestimmten Volumenstrom eingestellt wird und hiervon ausgehend Sprühanordnungen bzw. deren Stellglieder mit zunehmenden Abstand derart eingestellt werden, dass der jeweilige Volumenstrom an Primärmedium im Vergleich gesteigert oder verringert wird. In dieser oder in sonstiger Weise kann mit der Steuervorrichtung die selektierte Untermenge an Sprühanordnungen in einer von den Messdaten abhängigen Weise gesteuert werden.

Wie bereits zuvor erwähnt, können die Messdaten auch kühlturmbezogene, prozessbezogene bzw. sprühanordnungsbezogene, im Folgenden Sprühanordnungs-Messwerte genannte Messdaten aufweisen oder hierdurch gebildet sein. Hierzu weisen die Sprühanordnungen jeweils eine oder mehrere Messeinrichtungen, insbesondere Sensoren, zur Bestimmung von Sprühanordnungs-Messwerten auf. Hierbei kann es sich um Sensoren zur Bestimmung der Primärmediumtemperatur, eines Primärmediumdrucks und/oder eines Umgebungsluftdrucks in der Umgebung der jeweiligen Sprühanordnung handeln. In entsprechender Weise können die Messdaten die (individuelle) Primärmediumtemperatur, den (individuellen) Primärmediumluftdruck und/oder den (individuellen) Umgebungsluftdruck aufweisen und/oder hierdurch gebildet sein. Hiervon abhängig können mittels der Steuervorrichtung wiederum die Stellglieder der jeweiligen Sprühanordnungen individuell gesteuert oder geregelt werden.

Die Sprühanordnungs-Messwerte werden vorzugsweise von den Sprühanordnungen an die Steuervorrichtung übermittelt oder sind hieran übermittelbar. Auf diese Weise ist es möglich, thermodynamische Vorgänge im Prozessraum während des Betriebs des Kühlturms zu berücksichtigen und bedarfsweise automatisch mittels der Sprühanordnungen bzw. Stellglieder das Gesamt-Sprühbild des Sprühfeldsystems anzupassen, um hierauf Einfluss zu nehmen.

Die Stellglieder der jeweiligen Sprühanordnungen können auf Basis oder unter Berücksichtigung der Sprühanordnungs-Messwerte steuerbar und/oder regelbar sein. Beispielsweise kann mit der für die jeweilige Sprühanordnung individuellen Primärmediums-Temperatur und/oder dem für die jeweilige Sprühanordnung individuellen Primärmediumsdruck ein durch diese Sprühanordnung abgegebene Wärmemenge geregelt werden. Die Primärmediums-Temperatur und/oder der Primärmediumsdruck bilden hierbei Eingangsgrößen eines Regelkreises, dessen Regelgröße ein Steuerbefehl für das Stellglied bilden kann. Auf diese Weise kann erreicht werden, dass durch alle oder eine bestimmte Gruppe von Sprühanordnungen dieselbe Wärmeenergiemenge abgegeben bzw. dieselbe Kühlleistung bewirkt wird.

Die Steuervorrichtung weist vorzugsweise ein Steuermodul zur Erzeugung von Steuerbefehlen auf. Hierbei ist die Steuervorrichtung vorzugsweise mit dem oder mittels des Steuermoduls dazu ausgebildet, auf Basis der Messdaten Steuerbefehle zu generieren. Die Steuerbefehle können an die jeweiligen Sprühanordnungen bzw. Stellglieder übermittelt werden, damit diese Stellglieder die Abgabe eines bestimmten bzw. eine bestimmte Veränderung des abgebbaren oder abzugebenden Volumenstroms an Primärmedium durch die jeweilige Sprühanordnung einstellen.

Die Steuervorrichtung weist vorzugsweise eine Steuervorrichtungs-Schnittstelle auf, mit der die Steuerbefehle an die Sprühanordnungen übermittelt werden oder übermittelbar sind. Hierzu korrespondierend weisen die Sprühanordnungen vorzugsweise jeweils eine Sprühanordnung-Schnittstelle auf, mit der die Steuerbefehle von der Steuervorrichtung empfangbar sind oder empfangen werden.

Auf Basis der Steuerbefehle können die Stellglieder steuerbar sein oder gesteuert werden, insbesondere in einer Form, durch die der durch die jeweilige Sprühanordnung abzugebende bzw. abgebbare Volumenstrom eingestellt bzw. variiert wird oder variierbar ist.

Zwischen der Steuervorrichtungs-Schnittstelle und den Sprühanordnungs-Schnittstellen sind vorzugsweise eine oder mehrere drahtlose und/oder drahtgebundene Datenverbindungen vorgesehen. Über diese Datenverbindungen können die Steuerbefehle von der Steuervorrichtung an die (jeweilige) Sprühanordnung übermittelt werden bzw. übermittelbar sein.

Alternativ oder zusätzlich kann/können über die Datenverbindung(en) die Sprühanordnungs-Messwerte von den Sprühanordnungen an die Steuervorrichtung übermittelt werden oder übermittelbar sein.

Durch die Sprühanordnungs-Schnittstellen und die Steuervorrichtungs-Schnittstelle können die Steuervorrichtung und die Sprühanordnungen ein Datennetzwerk bilden, insbesondere ein drahtgebundenes oder Funk-Netzwerk.

Die Sprühanordnungs-Schnittstellen untereinander und/oder mit der Steuervorrichtungs-Schnittstelle können also grundsätzlich Datenverbindungen per Funk automatisch aufbauen. Bei den Datenverbindungen kann es sich, jedenfalls teilweise, um sogenannte Ad-Hoc-Verbindungen handeln. Alternativ oder zusätzlich ist es möglich, dass Steuerbefehle und/oder Sprühanordnungs-Messwerte über weitere Sprühanordnungen an eine Ziel-Sprühanordnung und/oder an die Steuervorrichtung weitergereicht werden. Es ist auch möglich, dass bestimmte Sprühanordnungen sogenannte Knoten-, Router-, Bridge- und/oder Switch- Funktionen übernehmen und in dieser Funktion Sprühanordnungs-Messwerte und/oder Steuerbefehle weiterleiten.

Die Datenverbindungen können, insbesondere bei drahtgebundenen Datenverbindungen, durch einen sogenannten Datenbus realisiert sein. Hierbei können mehrere Sprühanordnungen mit demselben Datenbus, insbesondere mittels derselben Steuerleitungen, mit einem Knoten bzw. der Steuervorrichtung und/oder untereinander verbunden sein.

Eine Adressierung wird vorzugsweise in jedem Fall verwendet, um die Steuerbefehle an individuelle, insbesondere mit dem Datenbus verbundene Sprühanordnungen zu übermitteln und/oder um Sprühanordnungs-Messwerte einer Sprühanordnung oder seiner Position zuordnenden zu können. Diese Zuordnung erfolgt bevorzugt durch die Steuervorrichtung, die jeweils eine Position dem Sprühanordnungs-Messwert zuordnen kann. Diese Zuordnung kann bei der Analyse der Sprühanordnungs-Messwerte und/oder bei der Steuerung bzw. Regelung der Sprühanordnungen bzw. Stellglieder berücksichtigt werden. Hierbei haben die jeweiligen Sprühanordnungen individuelle Adressen. Es sind grundsätzlich jedoch auch andere Lösungen möglich.

In einer weiteren Variante ist vorzugsweise eine Stromversorgung vorgesehen, um die Sprühanordnungen (vorzugsweise drahtgebunden) mit Strom zu versorgen. Über die Stromversorgung oder über zu Stromversorgungsleitungen parallel verlaufende Datenleitungen können in diesem Fall die Steuerbefehle und/oder Sprühanordnungs-Messwerte übermittelt werden. Alternativ kann die Stromversorgung der jeweiligen Sprühanordnungen jedoch auch auf andere Weise, beispielsweise durch Stromerzeugung mit dem Primärmedium in der jeweiligen Sprühanordnung erfolgen.

Ein weiterer, auch unabhängig realisierbarer Aspekt der vorliegenden Erfindung betrifft einen Kühlturm mit einem vorschlagsgemäßen Sprühfeldsystem.

Bei dem Kühlturm sind die Sprühanordnungen vorzugsweise zumindest im Wesentlichen in einer bevorzugt horizontalen Ebene und/oder äquidistant zueinander angeordnet. Beispielsweise können Verbindungslinien zueinander jeweils unmittelbar benachbarter Sprühdüsen eine schachbrettartige Struktur bilden. Hier sind jedoch auch andere Lösungen möglich.

Alternativ oder zusätzlich sind bezogen auf die Gravitation unterhalb der Sprühanordnungen Kühlturmeinbauten, insbesondere Füllkörper vorgesehen.

Alternativ oder zusätzlich sind bezogen auf die Gravitation oberhalb der Sprühanordnungen Tropfenabscheider angeordnet.

Besonders bevorzugt weist der Kühlturm mindestens einen Wettersensor bzw. eine Wetterstation zur Messung der wetterbezogenen Messdaten an oder in direkter Umgebung des Kühlturms auf. Hierbei kann es sich um einen oder mehrere Windsensoren handeln, um eine Windstärke und/oder Windrichtung zu ermitteln.

Alternativ oder zusätzlich kann es sich um Temperatursensoren und/oder Sensoren zur Messung der (relativen) Luftfeuchtigkeit und/oder eines Luftdrucks, insbesondere im Bereich einer Einlassöffnung für Kühlmedium handeln. Alternativ oder zusätzlich wird eine Druckdifferenz gemessen oder ist messbar, die den Differenzdruck zwischen der Umgebungsluft auf Höhe von Zuluftöffnungen für das Kühlmedium und einer Auslassöffnung für das Kühlmedium charakterisieren. Auf diese Weise können beispielsweise Inversionswetterlagen ermittelt und berücksichtigt werden. Die Messwerte eines oder mehrere der, teilweise optional vorhandenen Wettersensoren bzw. der Wetterstation(en) werden vorzugsweise als Messdaten dazu verwendet, die Sprühanordnungen (automatisch) zu steuern bzw. der Kühlturm und/oder die Steuervorrichtung ist/sind hierzu ausgebildet.

In einem weiteren, auch unabhängig realisierbaren Aspekt der vorliegenden Erfindung wird/werden ein oder mehrere Adapter zur fluidischen Verbindung von Sprühköpfen, die zum Versprühen bzw. Verregnen des Primärmediums ausgebildet sind, mit einer Zuleitung zur Versorgung der Sprühköpfe mit Primärmedium in einem Sprühfeldsystem eines Kühlturms verwendet. Hierdurch weist das Sprühfeldsystem eine Vielzahl gleichartiger Sprühanordnungen auf, die jeweils unter fluidischer Verbindung eines der Adapter mit einem oder mehreren der Sprühköpfen gebildet sind.

Der jeweilige Adapter weist ein Stellglied zur Steuerung des durch die jeweilige Sprühanordnung abgebbaren oder abzugebenden Volumenstroms an Primärmedium auf. Auf diese Weise ist der durch die jeweilige Sprühanordnung abgebbare oder abzugebende Volumenstrom an Primärmedium individuell einstellbar.

Der Adapter kann einen Adapterkörper aufweisen, der einen Kanal bildet, um die Zuleitung mit dem Sprühkopf fluidisch zu verbinden. Der Kanalquerschnitt kann durch das Stellglied variiert werden.

Zu diesem Zweck sind die Adapter jeweils mit der Sprühanordnungs-Schnittstelle zum Empfang von Steuerbefehlen ausgerüstet, wobei die Stellglieder durch die Steuerbefehle derart steuerbar sind, dass der über die jeweilige Sprühanordnung abgebbare Volumenstrom an Primärmedium steuerbar ist.

Mit anderen Worten werden also steuerbare Adapter verwendet, die zwischen die Zuleitung und Sprühköpfe zum Verregnen des Primärmediums geschaltet werden. Die Adapter weisen jeweils das Stellglied zur Steuerung des Volumenstroms auf. Auf diese Weise können individuell einstellbare Sprühanordnungen auch nachträglich dadurch erzeugt werden, dass zwischen vorhandene Sprühköpfe und eine bereits vorhandene Zuleitung eines Kühlturms jeweils ein vorschlagsgemäßer Adapter angeordnet wird. Der Adapter bildet hierbei vorzugsweise eine steuerbare Passage, die abhängig von der Stellung des Stellglieds eine fluidische Verbindung zwischen der Versorgungsleitung und den Sprühköpfen herstellt, drosselt und/oder schließt.

Ein weiterer Aspekt der vorliegenden Erfindung betrifft ein Verfahren zur Steuerung der Abgabe von Primärmedium durch in einem Sprühfeld eines Kühlturms, vorzugsweise Naturzugs-Kühlturm, angeordnete Sprühanordnungen. Die Sprühanordnungen weisen jeweils Stellglieder zur Steuerung der Abgabe von Primärmedium auf, sodass der durch die Sprühanordnungen abgebbare Volumenstrom an Primärmedium für die jeweilige Sprühanordnung individuell einstellbar ist oder eingestellt wird. Die Sprühanordnungen bilden hierbei vorzugsweise das oder einen Teil des Sprühfeldsystems.

Die Stellglieder werden hierbei vorzugsweise in Abhängigkeit von Messdaten adaptiv gesteuert. Die Messdaten sind insbesondere wetterbezogen. Die Steuerung erfolgt bevorzugt in Echtzeit oder nahe Echtzeit, also in Abhängigkeit von den zur Betriebszeit gemessenen oder vorliegenden Messdaten. Auf diese Weise wird durch das Sprühfeldsystem insgesamt ein Sprühbild erzeugt, das die Messdaten und/oder deren Verlauf berücksichtigt.

Das vorschlagsgemäße Verfahren ermöglicht es, die Eigenschaften des Kühlturms durch Variation des verregneten Volumenstroms an Primärmedium und/oder durch Variation von Zonen, in denen Sprühanordnungen in einer bestimmten Weise eingestellt werden, auch bei einer Wetteränderung konstant zu halten bzw. zu regeln.

Alternativ oder zusätzlich kann mittels des Verfahrens, der Verwendung und/oder des vorschlagsgemäßen Sprühfeldsystems auf andere Veränderungen reagiert werden. Wenn beispielsweise die an den Kühlturm gelieferte Wärmemenge einer an den Kühlturm angeschlossenen Anlage wie die eines Kraftwerks variiert wird, können die Kühleigenschaften des Kühlturms automatisch angepasst werden, sodass unter Berücksichtigung der geänderten Randbedingungen eine verbesserte bzw. optimierte Betriebsweise und/oder verbesserter und/oder optimierter Wirkungsgrad der Gesamtanlage ermöglicht wird. Hierzu wird vorzugsweise auf Basis der Messdaten bei einer Teilmenge der Sprühanordnungen die Abgabe von Primärmedium automatisch aktiviert, unterbunden und/oder gedrosselt.

Einzelne Aspekte der vorliegenden Erfindung sind in unterschiedlicher Weise miteinander kombinierbar und auch getrennt voneinander realisierbar.

Weitere Aspekte, Eigenschaften und Vorteile der vorliegenden Erfindung ergeben sich aus den Ansprüchen und aus der folgenden Beschreibung bevorzugter Ausführungsformen anhand der Zeichnung.

In der Zeichnung zeigt:
Fig. 1 einen vorschlagsgemäßen Kühlturm;
Fig. 2 eine vorschlagsgemäße Sprühanordnung;
Fig. 3 ein vorschlagsgemäßes Sprühfeldsystem;
Fig. 3A eine sehr schematische Vergrößerung des Sprühfeldsystems aus Fig. 3 in einer ersten Ausführungsform;
Fig. 3B eine sehr schematische Vergrößerung des Sprühfeldsystems aus Fig. 3 in einer zweiten Ausführungsform;
Fig. 3C eine sehr schematische Vergrößerung des Sprühfeldsystems aus Fig. 3 in einer dritten Ausführungsform;
Fig. 3D eine sehr schematische Vergrößerung des Sprühfeldsystems aus Fig. 3 in einer vierten Ausführungsform;
Fig. 4 eine vereinfachte schematische Ansicht einer Steueranordnung zur Steuerung der Sprühanordnungen des vorschlagsgemäßen Sprühfeldsystems;
Fig. 5 ein vorschlagsgemäßes Sprühfeldsystem in einer ersten Betriebsweise;
Fig. 6 ein vorschlagsgemäßes Sprühfeldsystem in einer zweiten Betriebsweise;
und
Fig. 7 ein vorschlagsgemäßes Sprühfeldsystem in einer dritten Betriebsweise.

In den Figuren werden für dieselben oder ähnliche Teile dieselben Bezugszeichen verwendet, wobei dieselben oder ähnliche Eigenschaften und Vorteile erreicht werden können, auch wenn von einer wiederholten Beschreibung abgesehen wird.

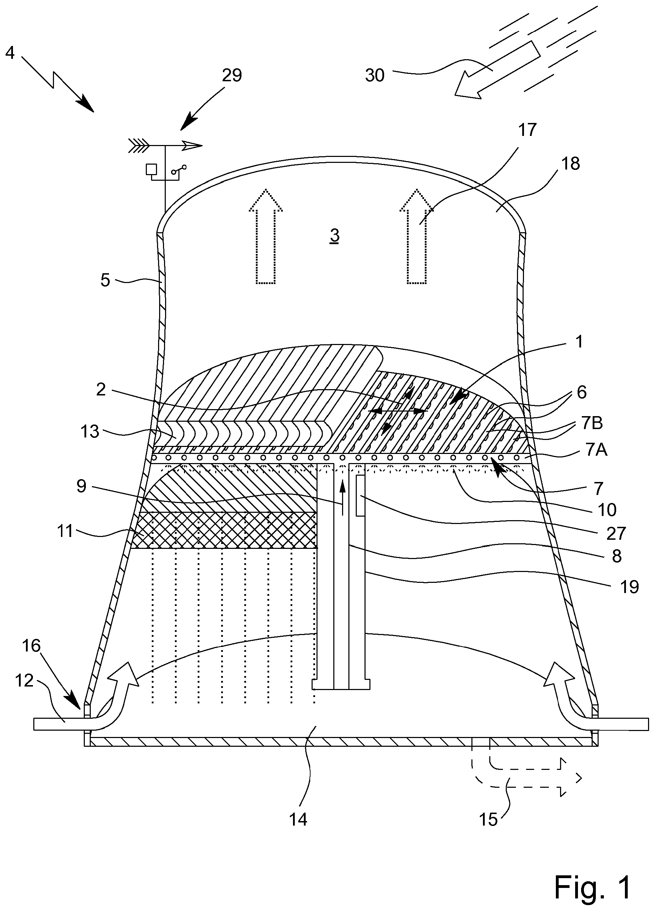

Fig. 1 zeigt ein vorschlagsgemäßes Sprühfeldsystem 1, wie es eine Sprühebene 2 oder ein Teil hiervon in einem Prozessraum 3 eines Kühlturms 4 bildet. Hierbei ist der Prozessraum 3 vorzugsweise durch eine Außenwand 5 des Kühltrurms 4 begrenzt oder definiert bzw. umschlossen.

Das Sprühfeldsystem 1 weist eine Vielzahl Sprühanordnungen 6 auf, die im Darstellungsbeispiel fluidisch an eine, bevorzugt durch ein Rohr oder Rohrsystem gebildete, Zuleitung 7 angebunden sind.

Die Zuleitung 7 kann eine Steigleitung 8 aufweisen oder mittels der Steigleitung 8 mit dem Primärmedium 9, bevorzugt Kühlmittel und/oder Wasser und/oder Kühlwasser, versorgt, insbesondere beschickt werden. In Fig. 1 ist das Primärmedium 9 durch einen Pfeil in Flussrichtung angedeutet.

Das Primärmedium 9 wird im Prozessraum 3 über die Zuleitung 7 den jeweiligen Sprühanordnungen 6 zugeführt. Die Sprühanordnungen 6 vernebeln bzw. verregnen das Primärmedium 9, wodurch ein Sprühnebel 10 bzw. Regen gebildet wird.

Im Prozessraum 3 sind oberhalb (versetzt entgegen der Gravitationskraft) und/oder unterhalb (versetzt in Richtung der Gravitationskraft) sogenannte Kühlturmeinbauten vorgesehen. Bei den Kühlturmeinbauten handelt es sich vorzugsweise um sogenannte Füllkörper 11 und/oder Tropfenabscheider 13.

Die Füllkörper 11 befinden sich unterhalb der Sprühebene 2 bzw. unterhalb des Sprühfeldsystems 1. Bei Füllkörpern 11 handelt es sich um Strukturen mit einer Oberfläche, die dazu ausgebildet sind, das Primärmedium 9 mit dem Kühlmedium, vorliegend Luft 12, in Kontakt zu bringen. Hierzu weisen die Füllkörper 11 steg- und/oder plattenartige Strukturen auf, wodurch die Oberfläche in Bezug auf das durch die Füllkörper 11 eingenommene Volumen maximiert werden soll. Hier sind jedoch auch andere Lösungen möglich.

Alternativ oder zusätzlich sind oberhalb der Sprühebene 2 bzw. des Sprühfeldsystems 1 Tropfenabscheider 13 angeordnet, die dazu ausgebildet sind, durch Luftströmung nach oben entgegen der Gravitationskraft mitgerissene Tropfen abzuscheiden.

Das Kühlmedium Luft 12 wird im vorliegenden Ausführungsbeispiel durch seitlich im Fußbereich des Kühlturms 4 vorgesehene Lufteintrittsöffnungen 16 angesaugt und, vorzugsweise durch den Kamineffekt, durch den Prozessraum 3 geleitet und als Abluft 17 durch eine obere Luftaustrittsöffnung 18 bzw. entgegen der Gravitationskraft abgegeben.

Der Kühlturm 4 im Darstellungsbeispiel ist ein Naturzugkühlturm, bei dem das Kühlmedium Luft 12 mittels des Kamineffekts durch den Prozessraum 3 befördert wird, wobei das Primärmedium 9 Wasser bzw. Warmwasser die Luft 12 erwärmt und diese daraufhin aufsteigt. Alternativ oder zusätzlich ist es auch möglich, dass die Erfindung bei sonstigen Nasskühltürmen, insbesondere Zellenkühltürmen, angewendet wird, bei denen der Transport des Kühlmediums Luft 12 aktiv, beispielsweise durch einen Ventilator, erfolgt.

Im Darstellungsbeispiel ist der Kühlturm 4 in einer Teilperspektive dargestellt, in der zur besseren Veranschaulichung des Sprühfeldsystems 1 bzw. der Sprühebene 2 die Kühlturmeinbauten, also die Füllkörper 11 und Tropfenabscheider 13 auf der rechten Seite teilweise weggeschnitten sind. In Wirklichkeit erstrecken sich die Füllkörper 11 und/oder Tropfenabscheider 13 zumindest im Wesentlichen über die gesamte Querschnittsfläche des Prozessraums 3. Für die vorliegende Erfindung sind die Kühlturmeinbauten jedoch optional und können auch anders als dargestellt oder nur teilweise oder nicht vorgesehen sein.

Die Sprühebene 2 bzw. erstreckt sich vorzugsweise über die gesamte Querschnittsfläche des Prozessraums 3. Hierbei sind die Sprühanordnungen 6 zumindest im Wesentlichen gleichmäßig über die Sprühebene 2 verteilt.

Der Kühlturm 4 weist im Darstellungsbeispiel einen Steigeschacht 19 auf, in dem die Steigleitung 8 vorgesehen ist. Der Steigeschacht 19 kann weitere technische Einrichtungen aufweisen und/oder das Sprühfeldsystem 1 und/oder Kühlturmeinbauten stützen.

Das verregnete Primärmedium 9 benetzt im Betrieb vorzugsweise die Füllkörper 11 und läuft an diesen entlang, bis das Primärmedium 9 an deren Unterseite Tropfen bildet, in eine bevorzugt wannenartige Auffangeinrichtung 14 fällt und durch den Kühlmittelablauf 15 seiner weiteren Bestimmung zugeführt werden kann.

Der Kühlturm 4 bildet vorzugsweise Teil einer Anlage, die beispielsweise eine Wärmekraftmaschine wie eine Dampfturbine oder dergleichen aufweist. Durch die Wärmekraftmaschine kann das Primärmedium 9 erhitzt werden, so dass dieses, bevorzugt in Form von Warmwasser, über die Zuleitung 7 den Sprühanordnungen 6 zugeführt, durch diese verregnet und durch den im Kühlturm ablaufenden Prozess abgekühlt werden kann. Das aufgefangene Primärmedium 9 (Kaltwasser) wird im Folgenden anderen Teilen der Anlage wieder zugeführt. Hierbei kann das Primärmedium 9 in einem Beispiel erneut erhitzt werden, um die Wärmekraftmaschine anzutreiben und/oder zu kühlen. Der Kühlturm 4 bildet vorzugsweise Teil eines Kreislaufs für das Primärmedium 9.

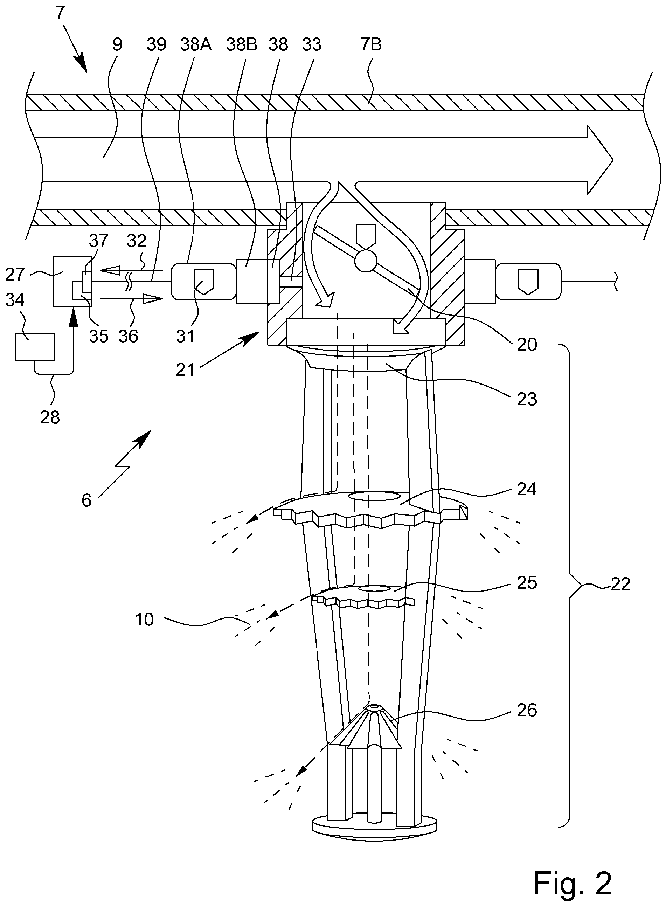

Fig. 2 zeigt in einer schematischen Ansicht ein Beispiel einer vorschlagsgemäßen Sprühanordnung 6. Die Sprühanordnung 6 wird durch die Zuleitung 7 gespeist. Im Darstellungsbeispiel ist die Zuleitung 7 durch ein Rohr gebildet. Hier gibt es jedoch auch andere Möglichkeiten.

Die Sprühanordnung 6 weist ein Stellglied 20 auf, das dazu ausgebildet ist, die durch die Sprühanordnung 6 abzugebende bzw. abgebbare Menge an Primärmedium 9 zu steuern.

Im Darstellungsbeispiel ist das Stellglied 20 durch einen Schieber, eine Klappe, ein Ventil oder dergleichen gebildet oder weist ein solches auf. Das Stellglied 20 ist vorzugsweise ein Verschlussmechanismus, der bevorzugt stufenlos oder durch Wahl vordefinierter Positionen einstellbar ist. Das Stellglied 20 wird/werden vorzugsweise über ein Kommunikationsnetzwerk asynchron angesprochen und eingestellt.

Das Stellglied 20 ist vorzugsweise dazu ausgebildet, einen Öffnungsquerschnitt bzw. hydraulischen (Minimal-)Querschnitt, durch den hindurch das Primärmedium 9 abgegeben wird, zu variieren. Auf diese Weise kann das Stellglied 20, insbesondere bei vorgegebenem Druck des Primärmediums 9, den abgebbaren oder abzugebenden Volumenstrom am Primärmedium 9 beeinflussen, insbesondere steuern.

Das Stellglied 20 wird vorzugsweise automatisch angetrieben, beispielsweise durch einen Elektromotor wie einen Servomotor oder dergleichen. Alternativ oder zusätzlich kann das Stellglied 20 jedoch auch auf andere Weise, beispielsweise pneumatisch, hydraulisch, magnetisch und/oder mechanisch verstellbar sein oder verstellt werden.

Im Darstellungsbeispiel bildet das Stellglied 20 Teil eines Adapters 21 bzw. ist in dem Adapter 21 vorgesehen. Der Adapter 21 ist dazu ausgebildet, zwischen der Zuleitung 7 und einem Sprühkopf 22 angeordnet zu werden. Der Sprühkopf 22 ist oder bildet vorzugsweise eine Sprühdüse oder weist eine solche auf.

Im Darstellungsbeispiel ist die Sprühanordnung 6 durch die Kombination des Adapters 21 mit dem Sprühkopfs 22 gebildet. Der Adapter 21 kann in dem Ausführungsbeispiel vom Sprühkopf gelöst werden. Insbesondere ist der Sprühkopf mit dem Adapter 21 und/oder der Adapter 21 mit der Zuleitung 7, beispielsweise durch Schrauben, verbindbar. Hier sind jedoch auch andere Lösungen möglich. Alternativ kann der Adapter 21 jedoch mit dem Sprühkopf 22 auch eine Einheit bilden oder einstückig gebildet sein (nicht dargestellt).

Im Darstellungsbeispiel ist der Adapter 21 als Aufsatz, Adapterstück und/oder Zwischenstück zur Verbindung mit einem Sprühdüsenfuß des Sprühkopfs 22 realisiert.

Der Adapter 21 ist vorzugsweise dazu ausgebildet, den Sprühkopf 22, auch Sprüher oder Sprühdüse genannt, fluidisch mit dem Innenraum der Zuleitung 7 zu verbinden, sodass das Primärmedium 9 aus der Zuleitung 7 durch den Adapter 21 hindurch mittels des Sprühkopfs 22 abgegeben, insbesondere vernebelt bzw. verregnet werden kann.

Wie bereits zuvor erläutert, ist der Adapter 21 vorzugsweise mit der Zuleitung 7, insbesondere reversibel und/oder lösbar, verbindbar. Alternativ oder zusätzlich ist der Adapter 21 mit dem Sprühkopf 22, vorzugsweise reversibel und/oder lösbar, verbindbar. Auf diese Weise kann der Adapter 21 in bestehende Systeme integriert werden, indem der Sprühkopf 22 von der Zuleitung 7 abmontiert und der Adapter 21 zwischen der Zuleitung 7 und dem Sprühkopf 22 montiert wird. Der Sprühkopf 22 ist dann im Ergebnis mittels des Adapters 21 an der Zuleitung 7 gehalten und/oder mittels des Adapters 21 mit der Zuleitung 7 fluidisch verbunden.

Das vorschlagsgemäße Sprühfeldsystem 1 weist eine Vielzahl, insbesondere gleichartiger, Sprühanordnungen 6 auf, von denen ein Beispiel in Fig. 2 dargestellt ist. Aufgrund der Tatsache, dass die Sprühanordnungen 6 jeweils Stellglieder 20 aufweisen, ist der durch die Sprühanordnungen 6 (jeweils) abgebbare Volumenstrom und/oder der insgesamt durch alle Sprühanordnungen 6 gemeinsam abgebbare Volumenstrom an Primärmedium 9 einstellbar.

Besonders bevorzugt ist der durch die jeweilige Sprühanordnung 6 abgebbare Volumenstrom an Primärmedium 9 individuell einstellbar. Durch die individuelle Einstellung des Volumenstroms der jeweiligen Sprühanordnungen 6 ist im Ergebnis auch der insgesamt, durch alle Sprühanordnungen 6 (kumuliert) abgebbare Volumenstrom einstellbar.

Der Sprühkopf 22 im Darstellungsbeispiel aus Fig. 2 weist eine Abgabeöffnung 23 auf, durch die das Primärmedium 9 im Betrieb austritt. Das austretende Primärmedium 9 trifft auf einen ersten Verteiler 24, der im Darstellungsbeispiel durch einen Ring oder ringartig gebildet ist, mit einer Durchtrittsöffnung, deren Querschnittsfläche bzw. lichte Weite geringer ist als die der Abgabeöffnung 23. Auf diese Weise leitet der erste Verteiler 24 einen ersten Anteil des durch die Abgabeöffnung 23 abgegebenen oder abgebbaren Primärmediums 9 um und verregnet diesen hierdurch.

Der restliche Anteil des Primärmediums 9 wird durch die Durchtrittsöffnung des ersten Verteilers zu einem zweiten Verteiler 25 geleitet, der ähnlich aufgebaut ist wie der erste Verteiler 24, jedoch mit einer Durchtrittsöffnung einer gegenüber dem ersten Verteiler 24 geringeren Querschnittsfläche bzw. lichten Weite. Hierdurch wird ein weiterer Anteil des Primärmediums 9 umgeleitet bzw. verregnet. Schlussendlich trifft der durch den zweiten Verteiler 25 durchtretende Anteil an Primärmedium 9 auf einen dritten Verteiler, der im Darstellungsbeispiel in Richtung der Abgabeöffnung 23 spitz zulaufend ist und den übrig gebliebenen Anteil an Primärmedium 9 verregnet.

Grundsätzlich sind jedoch auch andere Sprühköpfe 22 mit anderen Düsen und/oder Verteilkonzepten möglich und können in der Erfindung vorteilhaft eingesetzt werden.

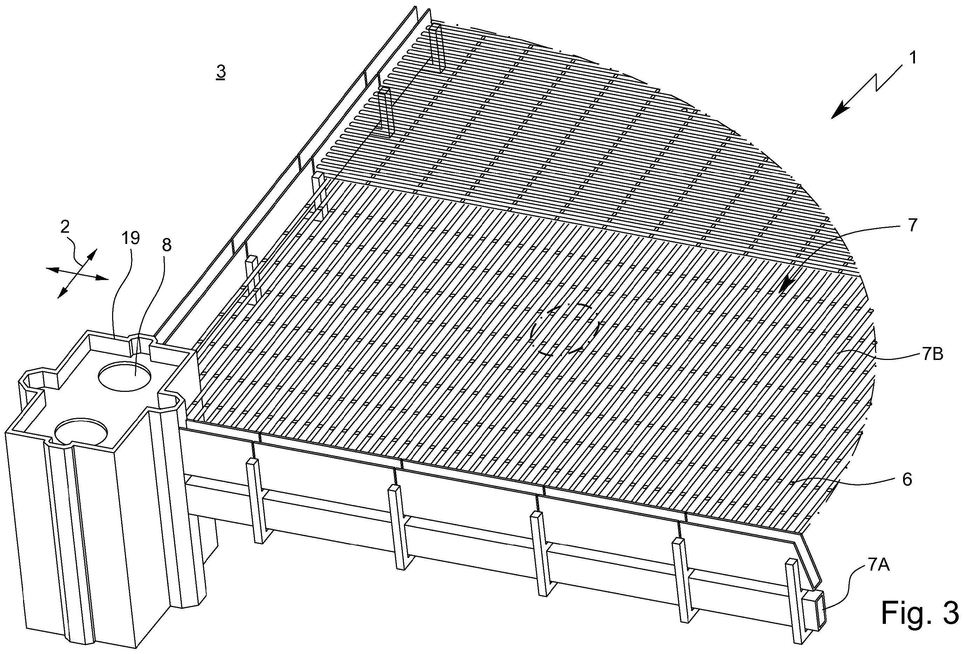

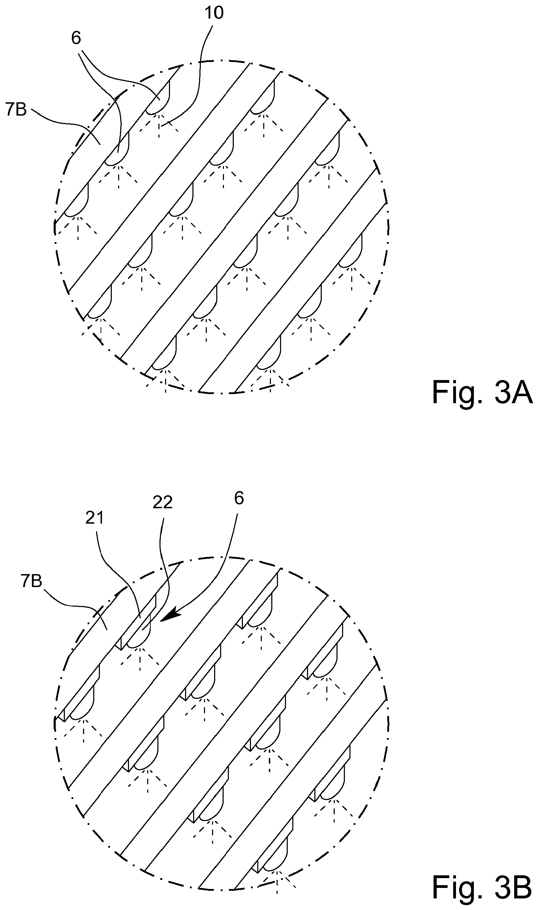

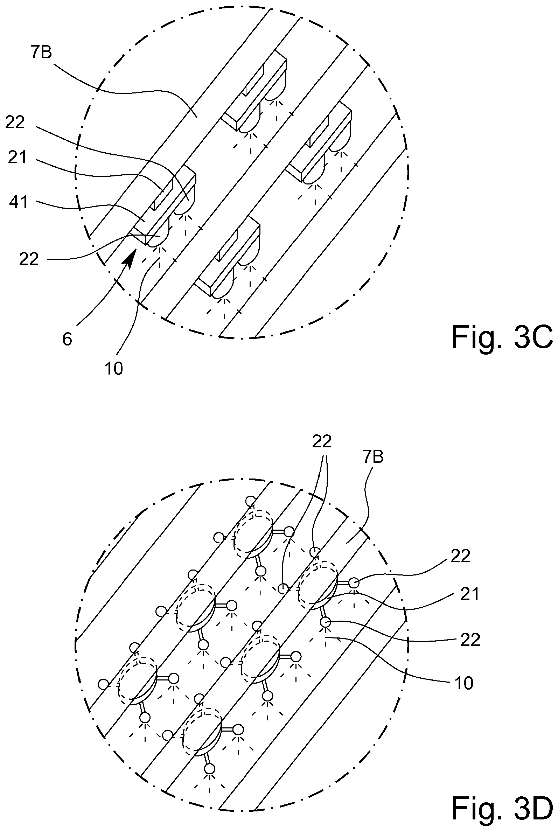

Fig. 3 zeigt eine schematische Ansicht eines vorschlagsgemäßen Sprühfeldsystems 1. Das Sprühfeldsystem 1 kann eine Sprühebene 2 oder ein Teil hiervon bilden. Im Darstellungsbeispiel ist das Sprühfeldsystem 1 durch ein Viertelkreissegment der Sprühebene 2 des Kühlturms 4 gebildet. Hier sind jedoch auch andere Lösungen möglich.

Das Sprühfeldsystem 1 weist vorzugsweise eine Zuleitung 7 zur Versorgung der Sprühanordnungen 6 mit Primärmedium 9 auf. Zu der Zuleitung 7 zählen im Darstellungsbeispiel Verteilerrohre 7A und Abzweigrohre 7B, die an den Verteilerrohren 7A angeschlossen sind und diesen gegenüber geringere Querschnitte aufweisen. An den Abzweigrohren 7B sind die Sprühanordnungen 6 angeschlossen.

Die Abzweigrohre 7B verlaufen im Darstellungsbeispiel zumindest im Wesentlichen parallel und/oder äquidistant, wodurch das Sprühfeldsystem 1 oder ein Teil hiervon aufgespannt werden kann.

Die Sprühanordnungen 6 sind vorzugsweise über die Abzweigrohre 7B äquidistant verteilt. Insbesondere sind die Sprühanordnungen 6 entlang der Abzweigrohre 7B in einem äquidistanten Abstand angeordnet, der dem Abstand zweier benachbarter Abzweigrohre 7B zueinander entspricht. Grundsätzlich sind jedoch auch andere Lösungen denkbar.

Die Sprühanordnungen 6 bzw. der Adapter 21 eines Sprühfeldsystems 1 sind vorzugsweise unterbrechungsfrei und/oder untrennbar mittels der Zuleitung 7 untereinander fluidisch verbunden. Hierdurch bilden diese ein Sprühfeld. Die Rohre des Sprühfelds des Sprühfeldsystems 1, also insbesondere das oder die Verteilerrohre 7A und Abzweigrohre 7B, sind vorzugsweise unterbrechungsfrei gebildet.

Mit anderen Worten kann ein Sprühfeld des Sprühfeldsystems 1 bzw. das Sprühfeldsystem 1 dadurch charakterisiert sein, dass das Sprühfeld bzw. Sprühfeldsystem 1 nur insgesamt mit Primärmedium 9 beschickt werden kann, ohne dass die Zuleitung 7 als solche, die Verteilerrohre 7A und/oder die Abzweigrohre 7B abgesperrt werden können, sodass ein Fluss von Primärmedium 9 verhindert würde. Die Zuleitung 7 bildet also vorzugsweise ein Rohrsystem zur (ausschließlich) gleichzeitigen Versorgung bzw. Beschickung aller Sprühanordnungen 6 des Sprühfelds bzw. Sprühfeldsystems 1 mit Primärmedium 9.

Das Stellglied 20 ist bzw. die Stellglieder 20 sind - bevorzugt individuell - vorzugsweise mittels einer Steuervorrichtung 27 steuerbar. Die Steuervorrichtung 27 kann der Sprühebene 2 bzw. dem Sprühfeldsystem 1 und/oder dem Kühlturm 4 zugeordnet sein bzw. diese können die Steuervorrichtung 27 aufweisen. Im Darstellungsbeispiel gemäß Fig. 1 ist die Steuervorrichtung 27 in den Steigeschacht 19 integriert. Sie kann jedoch auch in einer Steuerzentrale außerhalb des Kühlturms 4 oder an anderer Stelle vorgesehen sein.

Mit der Steuervorrichtung 27 kann die Stellung des (jeweiligen) Stellglieds 20, insbesondere der Klappe, des Schiebers oder dergleichen, eingestellt werden.

Die Steuervorrichtung 27 ist vorzugsweise zur individuellen Steuerung der Stellglieder 20 der jeweiligen Sprühanordnung 6 ausgebildet. Da eine Vielzahl von Sprühanordnungen 6 vorgesehen ist, kann die Steuervorrichtung 27 also bevorzugt einzelne Sprühanordnungen 6 des Sprühfeldsystems 1 unterschiedlich steuern.

Beispielsweise können einzelne, mehrere, alle und/oder bestimmte Sprühanordnungen 6 des Sprühfeldsystems 1 derart gesteuert werden, dass der maximale Volumenstrom an Primärmedium 9 erreicht wird. Hierzu kann die Klappe, der Schieber oder das sonstige Stellglied 20 des oder der betreffenden Sprühanordnungen 6 auf eine vollständig offene Stellung gebracht werden.

Alternativ oder zusätzlich werden andere Stellglieder 20 bzw. Sprühanordnungen 6 des Sprühfeldsystems 1 mittels der Steuervorrichtung 27 derart gesteuert bzw. beeinflusst, dass das Stellglied 20 bzw. die Stellglieder 20 betreffender Sprühanordnungen 6 teilweise schließen bzw. den Querschnitt für das Primärmedium 9 teilweise blockieren, so dass der Durchfluss des Primärmediums 9 durch den Adapter 21 bzw. in den Sprühkopf 22 verringert wird. Auf diese Weise kann der Volumenstrom an Primärmedium 9, der durch die betreffende/betreffenden Sprühanordnungen 6 abgegeben wird bzw. abgebbar ist, gedrosselt werden.

Diese Drosselung kann kontinuierlich und/oder stufenweise einstellbar sein. So ist es möglich, dass lediglich eine Zwischenstellung als Drosselstellung von dem Stellglied 20 in Kombination mit der Steuervorrichtung 27 unterstützt wird. Im Darstellungsbeispiel kann das Stellglied 20 hingegen unterschiedliche Drosselstellungen annehmen, in denen der abzugebende bzw. abgebbare Volumenstrom an Primärmedium 9 in unterschiedlicher Weise eingestellt bzw. gedrosselt ist.

Alternativ oder zusätzlich werden wiederum andere Stellglieder 20 bzw. Sprühanordnungen 6 derart gesteuert bzw. beeinflusst, dass eine Abgabe von Primärmedium 9 vollständig blockiert wird. Hierzu kann eine Klappe und/oder ein Schieber als Stellglied 20 zumindest im Wesentlichen oder vollständig geschlossen werden. Es ist jedoch möglich, dass eine vollständige Schließstellung durch das Stellglied 20 nicht unterstützt wird, so dass jedenfalls ein gewisser Mindest-Volumenstrom ausströmt. Dies kann je nach Konstruktion und Anwendung zum Schutz anderer Komponenten des Kühlturms 4, beispielsweise von Pumpen oder dergleichen, gewollt sein.

Die Steuervorrichtung 27 ist vorzugsweise dazu ausgebildet, Messdaten 28 zu ermitteln oder zu empfangen. Mit diesen Messdaten 28 kann die Steuervorrichtung 27 die Stellglieder 20 - bevorzugt individuell - steuern.

Die Messdaten 28 können grundsätzlich unterschiedlicher Natur und Herkunft sein. Die Messdaten 28 stehen jedoch besonders bevorzugt im Zusammenhang mit Betriebsparametern des Kühlturms 4 bzw. der Anlage, die den Kühlturm 4 aufweist.

In einem besonders bevorzugten Beispiel basieren die Messdaten 28 auf der Messung von Wetterphänomenen. Es handelt sich also um wetterbezogene Messdaten 28. Hierzu kann, wie in Fig. 1 dargestellt, der Kühlturm 4 eine oder mehrere Wetterstationen 29 aufweisen. Diese können, wie im Darstellungsbeispiel, direkt am Kühlturm 4, beispielsweise an dessen Außenwand 5, angeordnet sein. Alternativ oder zusätzlich sind eine oder mehrere Wetterstationen 29 dem Kühlturm 4 zugeordnet, bevorzugt in dessen Umgebung angeordnet. Auf diese Weise ist die bzw. sind die Wetterstationen 29 in der Lage, Messwerte zu erzeugen, die zu dem Wetter bzw. Wetterphänomenen am Ort des Kühlturms 4 korrespondieren.

Die beispielsweise durch eine oder mehrere Wetterstationen 29 ermittelten oder messbaren, alternativ auch von einem Wetterdienst, von einer Datenbank oder einem Server 34 empfangbaren bzw. abrufbaren, wetterbezogenen Messdaten 28 können beispielsweise eine Außentemperatur und/oder eine - insbesondere relative - Luftfeuchtigkeit, und/oder einen Luftdruck und/oder eine Windgeschwindigkeit, und/oder eine Windrichtung aufweisen oder hierdurch gebildet sein.

Es hat sich nämlich gezeigt, dass das Wetter am Ort des Kühlturms 4 einen maßgeblichen Einfluss auf die Funktion des Kühlturms 4 hat. Beispielsweise kann es im Prozessraum 3 aufgrund von Wind 30 zu Verwirbelungen und/oder zur Beeinflussung des Auftriebs des Kühlmediums (Luft) kommen.

Mit der vorliegenden Erfindung ist es möglich, insbesondere wetterbedingte, Einflüsse auf die Funktion des Kühlturms 4 zu berücksichtigen bzw. zu kompensieren.

Beispielsweise kann der Wind 30 je nach Richtung dazu führen, dass in gewissen Bereichen oder Abschnitten des Sprühfeldsystems 1 bzw. der Sprühebene 2 der Auftrieb des Kühlmediums Luft signifikant reduziert oder kompensiert wird oder ist. In solchen Bereichen kann die Steuervorrichtung 27 die Abgabe von Primärmedium 9 durch entsprechende Sprühanordnungen 6 reduzieren oder blockieren, indem in entsprechender Weise auf die Stellglieder 20 eingewirkt wird, so dass der Volumenstrom an Primärmedium 9 gedrosselt oder blockiert wird. Auf diese Weise kann das Primärmedium 9 konzentriert in solchen Bereichen bzw. Abschnitten des Sprühfeldsystems 1 bzw. der Sprühebene 3 verregnet werden, in denen eine effiziente und effektive Kühlwirkung erreicht werden kann. Alternativ, insbesondere in dem Fall, dass dem die Gesamtkühlleistung bei Drosselung nicht ausreicht, kann durch Vergrößerung des Volumenstroms in solchen Bereichen der Auftrieb gestützt werden. Auf diese Weise kann die Effizienz und/oder Effektivität des Kühlturms 4 verbessert werden.

In einem weiteren Beispiel kann die Steuervorrichtung 27 bestimmte Wetterlagen, beispielsweise eine Inversionswetterlage, detektieren und/oder berücksichtigen. Bei solchen Inversionswetterlagen kann der im Kühlturm 4 hervorgerufene Auftrieb des Kühlmediums Luft verringert sein. Die damit einhergehende verringerte Kühlleistung kann in vorteilhafter Weise durch die Steuervorrichtung 27 in Kombination mit den Stellgliedern 20 kompensiert werden.

Beispielsweise werden mehr Sprühanordnungen 6 aktiviert und/oder der durch diese abgegebene und/oder abgebbare Volumenstrom wird vergrößert, um die Thermik im Prozessraum 3 zu stützen und/oder die Kühlleistung zu erhöhen, so dass im Ergebnis trotz Inversionswetterlage eine ausreichende Kühlleistung erreicht wird. Alternativ können durch wechselbetrieb unterschiedlicher Sprühanordnungen 6 Luftbewegungen innerhalb des Prozessraums 3 hervorgerufen werden, um die Kühlung zu verbessern.

Die Messdaten 28 können alternativ oder zusätzlich auch von anderen Sensoren stammen bzw. andere Zusammenhänge repräsentieren.

In einem Beispiel korrespondieren die Messdaten 28 oder Teile hiervon zu Betriebsparametern einer Anlage, die dem Kühlturm 4 aufgeheiztes Primärmedium 9 liefert. Von der Anlage abhängig kann die für einen verbesserten bzw. optimalen Wirkungsgrad notwendige Kühlleistung schwanken. Diesen Schwankungen kann durch die vorliegende Erfindung Rechnung getragen werden, indem die Kühlleistung dynamisch, insbesondere in Echtzeit oder nahe Echtzeit, angepasst wird.

Hierzu kann die Steuervorrichtung 27 anlagenbezogene Messdaten 28 auswerten und die Sprühanordnungen 6 derart steuern, dass die Kühlleistung insgesamt angepasst wird. Beispielsweise ist es möglich, bestimmte der Sprühanordnungen 6 zu drosseln, so dass insgesamt weniger Primärmedium 9 abgegeben bzw. verregnet wird. Wird weniger Kühlleistung benötigt, ist es auch möglich, dass die Abgabe von Primärmedium 9 in ganzen Bereichen, Abschnitten bzw. Zonen des Sprühfeldsystems 1 bzw. Teilen der Sprühebene 2 deaktiviert oder gedrosselt wird.

Durch die vorliegende Erfindung ist es nicht nötig, hierbei den Kühlturm 4 einseitig zu belasten. Denn mit der vorliegenden Erfindung ist es möglich, Zonen mit aktiven oder gleichartig gesteuerten Sprühanordnungen dynamisch festzulegen und zu ändern, so dass die mittlere Kühlleistung auf ein vorgegebenes Niveau geregelt und/oder abgesenkt wird, in gewissen zeitlichen Abständen oder im zeitlichen Mittel jedoch alle Abschnitte der Füllkörper beregnet werden.

Alternativ oder zusätzlich können die Messdaten 28 auch zu Eigenschaften bzw. Parametern korrespondieren oder entsprechende Daten oder Informationen aufweisen, die aus dem Prozessraum 3 stammen. Insbesondere handelt es sich um Informationen, die an oder durch die jeweilige Sprühanordnung 6 ermittelt werden können.

Im Darstellungsbeispiel gemäß Fig. 2 weist der Adapter 21 zu diesem Zweck beispielsweise einen Luftsensor 31 auf, mit dem eine Lufttemperatur und/oder Luftbewegung (Thermik) als Messdaten 28 bzw. Sprühanordnungs-Messwerte 32 ermittelt werden können.

Alternativ oder zusätzlich kann die jeweilige Sprühanordnung 6 bzw. der jeweilige Adapter 21 als Kühlwassersensor 33 einen Temperatursensor zur Messung der Temperatur des Primärmediums 9 und/oder einen Drucksensor zur Bestimmung des Drucks des Primärmediums 9 an der jeweiligen Sprühanordnung 6 bzw. an dem jeweiligen Adapter 21 als Messdaten 28 bzw. Sprühanordnungs-Messwerte 32 aufweisen. Durch diese Sensoren oder auf andere Weise können die Temperatur und/oder der Druck des Primärmediums 9 an der jeweiligen Sprühanordnung 6 als Messdaten 28 bzw. Sprühanordnungs-Messwerte 32 gemessen, bestimmt und/oder empfangen werden.

Die Steuervorrichtung 27 kann solche Messdaten 28 alternativ oder zusätzlich zu den bereits zuvor erläuterten Messdaten 28 verwenden, um die Stellglieder 20 der Sprühanordnungen 6 zu steuern. Hierdurch kann die Abgabemenge bzw. der abzugebende oder abgebbare Volumenstrom an Primärmedium 9 für die jeweilige Sprühanordnung 6 individuell eingestellt werden.

In einem Beispiel wird eine automatische Druckkompensation durchgeführt, indem die Steuervorrichtung 27 die Stellglieder 20 in Abhängigkeit vom Druck des Primärmediums 9 im Bereich des jeweiligen Adapters 21 bzw. der jeweiligen Sprühanordnung 6 derart steuert, dass auch bei auftretenden Druckdifferenzen in der Zuleitung 7 im Bereich unterschiedlicher der Sprühanordnungen 6 derselbe Volumenstrom an Primärmedium 9 durch die Sprühanordnungen 6 abgebbar ist oder abgegeben wird.

Alternativ oder zusätzlich kann die Steuervorrichtung 27 die Temperatur des Primärmediums 9 dazu verwenden, die mittels des Primärmediums 9 abgebbare oder abgegebene Wärmeleistung zu steuern oder zu regeln, insbesondere zu vergleichmäßigen. Hier kann der abzugebende bzw. abgebbare Volumenstrom an wärmerem Primärmedium 9 gedrosselt werden im Vergleich zum abzugebenden bzw. abgebbaren Volumenstrom von kälterem Primärmedium 9 durch andere Sprühanordnungen 6, sodass die in unterschiedlichen Bereichen des Sprühfeldsystems 1 bzw. der Sprühebene 2 eingetragene Wärmeleistung geregelt, gesteuert, insbesondere vergleichmäßigt wird.

Alternativ oder zusätzlich verwendet die Steuervorrichtung 27 oder ist die Steuervorrichtung 27 dazu ausgebildet, Messdaten 28 bzw. Sprühanordnungs-Messwerte 32 eines Luftsensors 31 oder von Luftsensoren 31 der jeweiligen Sprühanordnungen 6 zu verwenden, um die Thermik in unterschiedlichen Bereichen oder Abschnitten des Sprühfeldsystems 1 bzw. der Sprühebene 2 zu ermitteln und die Stellglieder 20 derart zu steuern, dass die Thermik in einer (vor-) bestimmten Art und Weise beeinflusst, insbesondere vergleichmäßigt wird.

Der Luftsensor 31 zur Ermittlung von Parametern betreffend die Luft an oder im Umfeld der jeweiligen Sprühanordnung 6 ist vorzugsweise dazu ausgebildet, eine Lufttemperatur und/oder einen Luftdruck und/oder Luftströmungseigenschaften zu messen. Diese werden vorzugsweise als Sprühanordnungs-Messwert(e) 32 an die Steuervorrichtung 27 übermittelt. Die Steuervorrichtung 27 kann auf Basis dieser Informationen, wie zuvor bereits erläutert, die Stellglieder 20 der jeweiligen Sprühanordnungen 6 steuern und/oder regeln. Im Darstellungsbeispiel aus Fig. 2 ist der Luftsensor 31 in oder an einem Konnektor zur Herstellung einer Strom- und/oder Datenverbindung mit der jeweiligen Sprühanordnung vorgesehen, insbesondere integriert. Hier sind jedoch auch andere Lösungen möglich.

Alternativ oder zusätzlich kann/können eine ein oder mehrere Sprühanordnungen 6 bzw. ein oder mehrere der Adapter 21 einen Kühlwassersensor 33 zur Ermittlung von primärmedium-bezogenen Sprühanordnungs-Messwerten 32 aufweisen. Insbesondere handelt es sich um einen oder mehrere Kühlwassersensoren 33 zur Ermittlung der Primärmedium-Temperatur des Primärmedium-Drucks und/oder des Primärmedium-Volumenstroms, an der jeweiligen Sprühanordnung 6 bzw. der über die Sprühanordnung 6 abgegeben wird.

Mittels Sprühanordnungs-Messwerten 32, die den Abgegebenen Volumenstrom an Primärmedium repräsentieren, kann die Steuervorrichtung 27 das Stellglied 20 der Sprühanordnung 6, von der die Sprühanordnungs-Messwerte 32 stammen, derart steuern, dass ein Zielwert für den Volumenstrom erreicht wird. Im Ergebnis kann auf diese Weise eine Regelschleife zur Regelung des Volumenstroms an Primärmedium 9 gebildet sein. Der Sollwert für den Volumenstrom kann durch die Steuervorrichtung 27 auf Basis der Messdaten 28 gebildet oder berechnet werden. Grundsätzlich kann der Sollwert jedoch auch auf andere Weise erzeugt oder übermittelt oder empfangen werden.

Fig. 3A ist eine vereinfachte schematische Ausschnittsvergrößerung des Sprühfeldsystems 1 aus Fig. 3. Hier sind die Adapter 21 mit den Sprühköpfen 22 einstückig gebildet und jeder Adapter 21 bzw. jedes Stellglied 20 weist lediglich einen Sprühkopf 22 auf.

Fig. 3B ist eine vereinfachte schematische Ausschnittsvergrößerung des Sprühfeldsystems 1 aus Fig. 3 in einer zweiten Variante, in der der Adapter 21 getrennt von dem jeweiligen Sprühkopf 22 gebildet ist, wie exemplarisch anhand von Fig. 2 diskutiert. Darüber hinaus verbindet der Adapter 21 auch hier lediglich einen Sprühkopf 22 mit der Zuleitung 7.

In Fig. 3C und 3D sind vereinfachte schematische Ausschnittsvergrößerungen des Sprühfeldsystems 1 aus Fig. 3 in einer dritten und vierten Variante gezeigt, wobei der jeweilige Adapter 21 zwei oder mehr Sprühköpfe speist. Hierzu kann hinter dem Adapter 21 ein Verteiler 41 geschaltet sein, der Primärmedium 9 nach Durchfluss des Adapters 21 auf mehrere Sprühköpfe 22 verteilt.

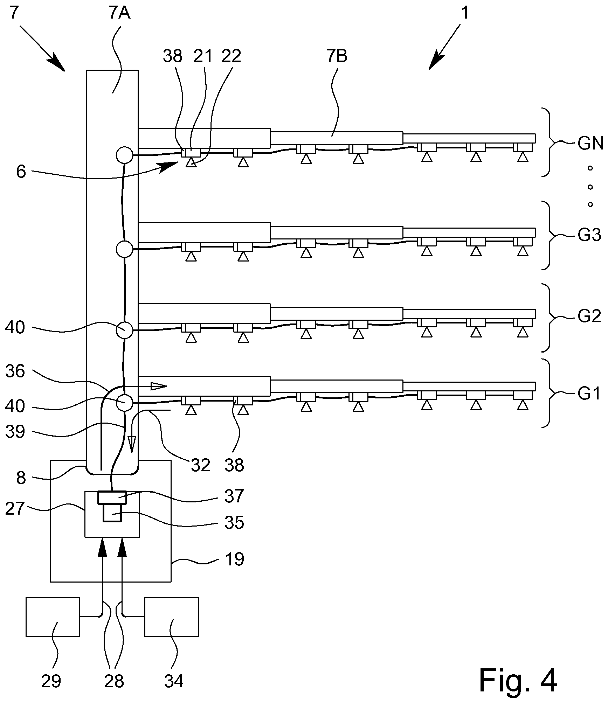

Fig. 4 zeigt eine stark vereinfachte, schematische Ansicht eines vorschlagsgemäßen Sprühfeldsystems 1.

Die Steuervorrichtung 27 kann ein Steuermodul 35 aufweisen, mit dem ein oder mehrere Steuerbefehle 36 erzeugt werden oder erzeugbar sind, durch die die Steuerung der Sprühanordnungen 6, Adapter 21 bzw. Stellglieder 20 erfolgt oder ermöglicht wird.

Die Steuervorrichtung 27 bzw. das Steuermodul 35 kann/können zu diesem Zweck bestimmte oder unterschiedliche Messdaten 28 berücksichtigen, verarbeiten und insbesondere aus oder mit den Messdaten 28 für die jeweilige Sprühanordnung 6 einen individuellen Steuerbefehl 36 generieren.

Das Steuergerät 27 kann eine Steuervorrichtungs-Schnittstelle 37 aufweisen und die Sprühanordnungen 6 können jeweils Sprühanordnungs-Schnittstellen 38 aufweisen, zwischen denen eine oder mehrere Datenverbindungen 39 bestehen oder erzeugt werden (können).

Die Datenverbindung 39(en) mit und/oder die Stromversorgung mit der jeweiligen Sprühanordnung 6 kann über Konnektoren hergestellt werden, im Darstellungsbeispiel gemäß Fig. 2 mittels eines Steckers 38A und einer Buchse 38B, wobei der Luftsensor 31 in dem Konnektor, also insbesondere in dem Steckers 38A oder der Buchse 38B oder hieran vorgesehen sein oder gebildet sein kann.

Zur Herstellung der Datenverbindung(en) 39 zwischen den Sprühanordnungen 6 und/oder zwischen der Steuervorrichtung 27 und der jeweiligen Sprühanordnung 6 kann ein Bussystem vorgesehen sein, durch das eine erste Gruppe G1 von Sprühanordnungen 6 datentechnisch mit der Steuervorrichtung 27 verbunden ist oder werden kann.

Es können noch weitere Gruppen G2, G3, GN vorgesehen sein, wobei die jeweiligen Sprühanordnungen 6 Teilnehmer eines Bussystems der jeweiligen Gruppe G1 bis GN bilden.

Die jeweiligen Gruppen G1 bis GN bzw. Bussysteme können über Knoten, insbesondere Switches, Router oder sonstige Datenkommunikationseinrichtungen untereinander und/oder mit der Steuervorrichtung 27 datentechnisch verbunden sein.

Gruppen GA bis GN können jedoch auch ohne Bussystem gebildet sein bzw. das Bussystem setzt keine Gruppenbildung voraus.

Grundsätzlich kann ein Hauptrechner wie ein Server vorgesehen sein, der die Steuervorrichtung 27 bildet. Zusätzlich können Knotenrechner zur Koordination, Verteilung von Daten, Weiterleitung von Daten und/oder Herstellung der Datenverbindungen 39 vorgesehen sein. Auf diese Weise kann ein Kommunikationsnetzwerk zwischen der Steuervorrichtung 27 und den jeweiligen Sprühanordnungen 6 realisiert sein.

Die Steuervorrichtung 27 kann die Messdaten 28 bzw. Sprühanordnungs-Messwerte 32 empfangen, aktiv abrufen, speichern und/oder auslesen. Bedarfsweise können die Messdaten 28 bzw. Sprühanordnungs-Messwerte 32 oder hiervon abgeleitete bzw. hieraus berechnete Größen der Steuerung zugrunde gelegt und/oder ausgegeben, insbesondere angezeigt werden.

Auf diese Weise kann ein Datennetz gebildet sein. Mittels des Datennetzes können Steuerbefehle an die jeweiligen Sprühanordnungen 6 oder Gruppen von Sprühanordnungen 6 übermittelt werden, sodass die jeweiligen Stellglieder 20 der Sprühanordnungen 6 individuell einstellbar sind.

Das Netzwerk bzw. sind die Datenverbindungen 39 sind vorzugsweise derart gestaltet, dass jede einzelne Sprühanordnung 6 bzw. jeder einzelne Adapter 21 oder jedes einzelne Stellglied 20 durch individuelle Adressierung gesteuert werden kann. Hierzu können die jeweiligen Sprühanordnungen 6, Adapter 21 oder Stellglieder 20 eindeutige Adressen aufweisen oder auf sonstige Weise eindeutig adressierbar sein. Eine Möglichkeit stellt hier die Adressierung mittels eines Protokolls, beispielsweise IP-Protokolls wie TCP/IP dar. Grundsätzlich kommen jedoch auch andere Kommunikationstechniken und/oder Protokolle in Betracht.

Die Datenverbindungen 39 sind im Darstellungsbeispiel drahtgebunden realisiert, können alternativ oder zusätzlich jedoch auch drahtlos sein. Beispielsweise können die Sprühanordnungen 6 ein Funk-Netzwerk, insbesondere ein Ad-Hoc-Funk-Netzwerk bilden. Dies ist beispielsweise mit dem Zigbee-Standard oder ähnlichen Verfahren möglich.

Die jeweiligen Sprühanordnungen 6 bzw. Adapter 21 und/oder Stellglieder 20 werden im Darstellungsbeispiel drahtgebunden mit Energie versorgt. Über die Energieversorgungsleitungen können auch die Datenverbindungen 39 realisiert sein. Alternativ erfolgen die Erzeugung der Datenverbindungen und die Stromversorgung getrennt voneinander.

Die Sprühanordnungen 6 bzw. Adapter 21 und/oder Stellglieder 20 werden in einer bevorzugten Ausführungsform über Kabel entlang einer Wasserrohleitung, die die Zuleitung 7 bildet, miteinander verbunden.

Als Anfang eines hierbei durch untereinander verbundene Sprühanordnungen 6 bzw. Adapter 21 und/oder Stellglieder 20 gebildeten Strangs kann ein Konten 40, insbesondere Relaisknoten, dienen, welcher die Kommunikation mit allen Adaptern 21 des jeweiligen Strangs übernimmt.

Mehrere Konten 40 können entlang einer Hauptverteilung miteinander verbunden sein oder werden.

Als zentraler Knoten bzw. Steuervorrichtung 27 kann ein Kleinrechner dienen, welcher die Konten 40 verwaltet. Dieser zentrale Knoten bzw. die Steuervorrichtung 27 kann/können eine Kommunikation oder Datenverbindung mit kühlturmexternen Stellen (Kraftwerkszentrale, etc.) realisierten.

Die Sprühanordnungen 6 können jeweils individuelle Kennungen aufweisen und/oder übermitteln. Die Kennungen können durch einen Knotenidentifikator, der den Knoten 40 identifiziert, an dessen Strang eine bestimmte Sprühanordnung 6 vorgesehen ist. Alternativ oder zusätzlich kann die Kennung durch einen Sprühanordnungsidentifikator erfolgen, der die Position der bestimmten Sprühanordnung 6, insbesondere innerhalb des Strangs, identifiziert. Insgesamt kann eine Identifikation bzw. Adressierung durch die Kombination aus Knotenidentifikator und Sprühanordnungsidentifikator erfolgen. Durch diesen Aufbau kann eine einfache Identifikation jeder Sprühanordnung 6 erfolgen.

Besonders bevorzugt verfügt jeder Adapter 21 und/oder jedes Verbindungskabel, das den jeweiligen Adapter 21 zur Herstellung der Datenverbindung 39 und/oder Stromversorgung verbindet oder anbindet, über einen oder mehrere Sensoren zur Messung des Wasservordrucks und/oder der Wassertemperatur (Kühlwasser 33) und/oder, der Lufttemperatur, der Luftfeuchtigkeit und/oder des Luftdrucks (Luftsensor 31). Die Sprühanordnungs-Messwerte 32 können mit diesem oder diesen Sensoren gemessen und vorzugsweise über die Knoten 40 abgefragt werden.

Grundsätzlich ist es möglich, dass die Steuervorrichtung 27 mit einem oder mehreren der Sprühanordnungen 6 bzw. Stellgliedern 20 einen oder mehrere Regelkreise bildet.

Beispielsweise ist es möglich, dass seitens einer dem Kühlturm 4 zugeordneten Anlage oder auf sonstige Weise eine bestimmte Kühlleistung vorgebbar ist oder vorgegeben wird. Die Kühlleistung kann durch die Steuervorrichtung als Sollwert zur Regelung eines, mehrerer oder aller Stellglieder 20 der Sprühanordnungen 6 verwendet werden.

Die Regelung kann durch die Steuervorrichtung 27 erfolgen, indem - insbesondere auf Basis der Messdaten 28 - eine aktuelle Kühlleistung des Kühlturms 4 als Istwert ermittelt oder abgeschätzt wird, insbesondere durch die Steuervorrichtung 27 berechnet wird. Wenn der Istwert vom Sollwert abweicht, die aktuelle berechnete oder auf andere Weise ermittelte Kühlleistung also von der vorgegebenen Soll-Kühlleistung abweicht, kann die Steuervorrichtung 27 die Stellglieder 20 steuern, bis oder sodass die Kühlleistung (Istwert) dem Sollwert für die Kühlleistung entspricht.

Als Stellglied im regelungstechnischen Sinn für einen mit der Steuervorrichtung 27 und, bevorzugt, auf Basis der Messdaten 28 gebildeten Regelkreis dienen grundsätzlich die Stellglieder 20. Es ist jedoch möglich, dass je nach Bedarf und Zustand unterschiedliche Istwerte verwendet und/oder Sollwerte ermittelt werden. Ferner ist es möglich, dass bei Regelung auf eine vorgegebene Kühlleistung ein oder mehrere unterschiedliche Messdaten 28 für die Regelung einbezogen werden und/oder andere ignoriert werden.

So ist es aufgrund der Vielzahl von Sprühanordnungen 6 möglich, dieselbe Kühlleistung mit unterschiedlichen Sprühbildern zu erreichen. Hierzu können neben der vorgegebenen Kühlleistung weitere Messdaten 28 dazu verwendet werden, bestimmte Sprühanordnungen 6 im Hinblick auf den abzugebenen oder abgebbaren Volumenstrom an Primärmedium 9 zu drosseln, während andere der Sprühanordnungen 6 derart gesteuert werden, dass diese den maximalen, minimalen oder keinen Volumenstrom an Primärmedium abgeben.

In einem Beispiel kann das Sprühfeldsystem 1 bzw. der Kühlturm 4 in Echtzeit oder nahe Echtzeit auf einen, gegebenenfalls veränderlichen, Sollwert für die Kühlleistung geregelt werden, während das durch das Sprühfeldsystem 1 bzw. die Sprühebene 2 erzeugte Sprühbild von wetterbezogenen Messdaten 28 wie einer Lufttemperatur, einer Windgeschwindigkeit und/oder einer Windrichtung abhängig gesteuert wird. Alternativ oder zusätzlich können ein oder mehrere Sprühanordnungs-Messwerte 32 berücksichtigt werden.

Auf diese Weise kann durch die variable Einstellung der Kühlleistung die Effizienz der dem Kühlturm 4 zugeordneten oder den Kühlturm 4 aufweisenden Anlage optimiert werden, während gleichzeitig die Effizienz des Kühlturms 4 als solches verbessert bzw. optimiert wird.

In einem Aspekt der vorliegenden Erfindung werden die Sprühanordnungen 6 also als Stellglieder 20 eines Regelkreises oder mehrerer Regelkreise derart gesteuert, dass der Kühlturm 4 eine Soll-Kühlleistung erreicht, während der durch die einzelnen Sprühanordnungen 6 abgebbare oder abzugebende Volumenstrom an Primärmedium 9 (Kühlwasser) verändert wird, um ein insgesamt anderes Sprühbild durch die Sprühanordnungen 6 zu erzeugen. Hierdurch kann bei zumindest im Wesentlichen gleichbleibender Kühlleistung die Effizienz des Kühlturms 4 optimiert und/oder es können die Messdaten 28 oder Teile hiervon für die Regelung berücksichtigt werden.

Wie bereits zuvor erläutert, kann die Steuervorrichtung 27 das Sprühfeldsystem 1 bzw. ein Sprühfeld des Sprühfeldsystems 1 logisch in Zonen aufteilen und/oder Untermengen von Sprühanordnungen 6 (insbesondere in der/den Zonen) identifizieren bzw. selektieren. Diese Untermengen können in bestimmten Abschnitten des Sprühfeldsystems 1 liegen oder Abschnitte bilden. Mit anderen Worten können Abschnitte des Sprühfeldsystems 1 bzw. eines Sprühfeld des Sprühfeldsystems 1 als Zone definiert sein oder werden. Die innerhalb der Zone angeordneten Sprühanordnungen 6 können als Gruppe oder Untermenge von der Steuervorrichtung 27 in vorteilhafter Weise gleichartig und/oder in einer von den Messdaten abhängigen Weise gesteuert werden. Insbesondere werden die innerhalb der Zone angeordneten Sprühanordnungen 6 können als Gruppe oder Untermenge identifiziert oder selektiert und solche identifizierten bzw. selektierten Sprühanordnungen 6 können von der Steuervorrichtung 27 in vorteilhafter Weise gleichartig und/oder in einer von den Messdaten abhängigen Weise gesteuert werden.

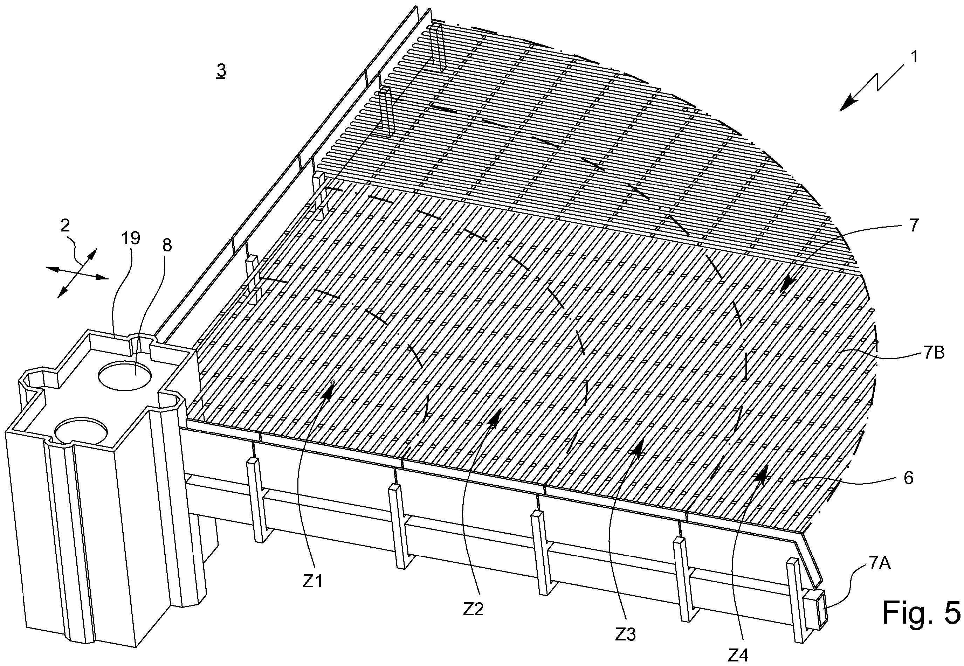

In Fig. 5 sind Kreissegmentabschnitte bzw. Zonen Z1 bis Z4 angedeutet, die Flächenabschnitte des Sprühfeldsystems 1 definieren. Im Darstellungsbeispiel gemäß Fig. 5 handelt es sich um Kreise, Ringe, Kreissegmente und/oder Ringsegmente um einen Mittelpunkt bzw. Symmetriepunkt der Sprühebene 2. In einer oder mehrerer der Zonen Z1 bis Z4 angeordnete Sprühanordnungen 6 können selektiert und/oder in bestimmter Weise, beispielsweise gleichartig oder wechselweise gesteuert werden.

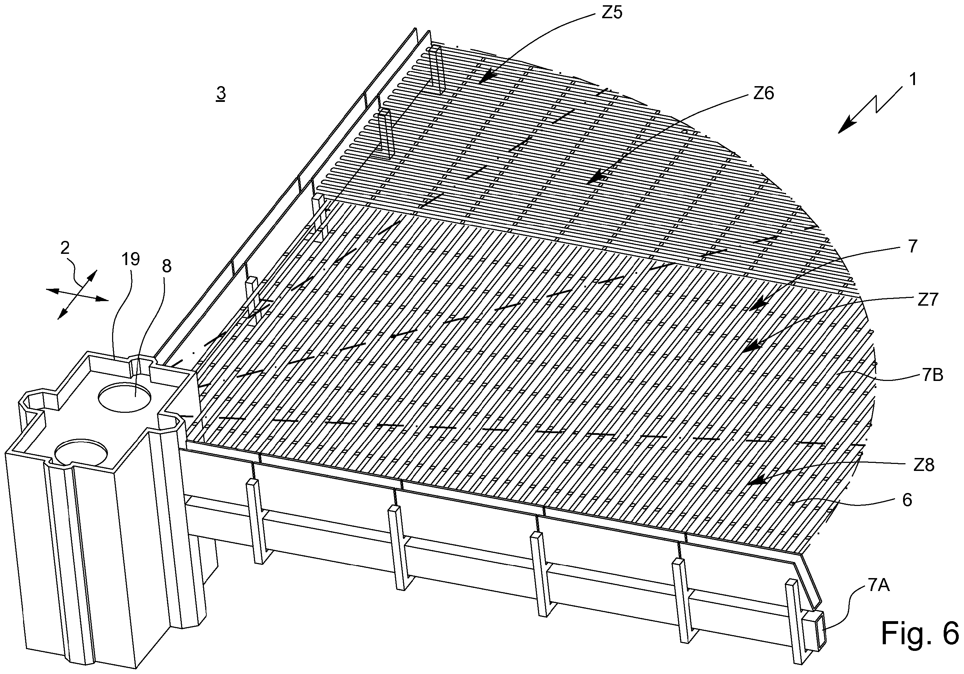

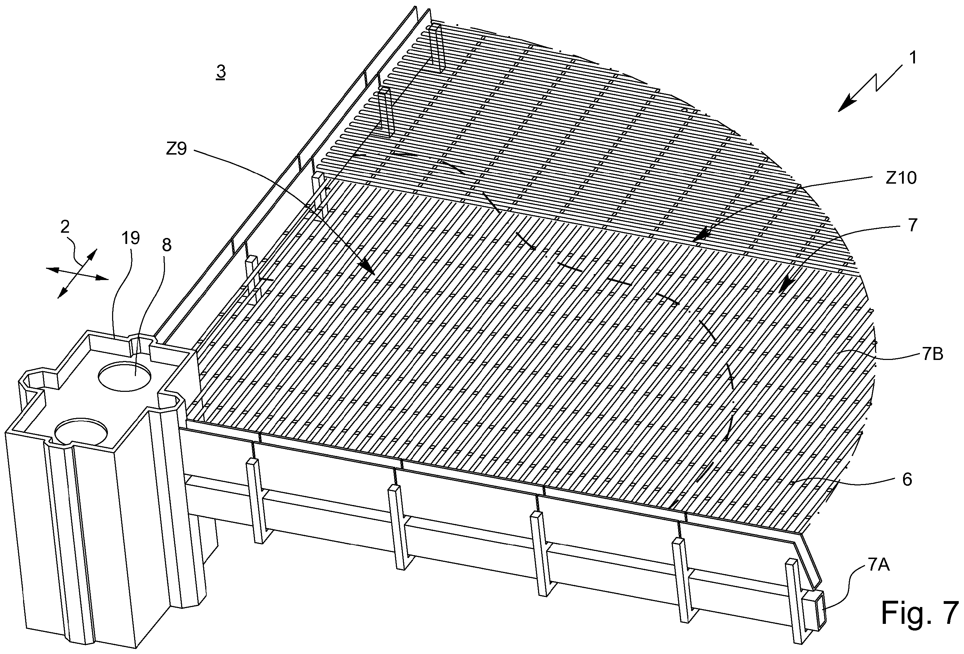

Fig. 6 zeigt ein weiteres Beispiel, in dem das Sprühfeldsystem 1 in unterschiedliche Segmente bzw. Zonen Z5-8 eingeteilt ist, wobei Sprühanordnungen 6 der jeweiligen Zone Z5-8 identifiziert, selektiert und/oder in gleichartiger oder einer sonstigen vorbestimmten Weise gesteuert werden können, während die Sprühanordnungen 6 eines anderen Segments bzw. einer anderen Zone Z5-8 anders gesteuert werden oder steuerbar sind. Fig. 7 zeigt das Beispiel eines Sprühfeldsystems 1 mit individuell geformten Zonen Z9, Z10.

Diese Zonen Z9, Z10 können dadurch gebildet werden, dass unter Berücksichtigung der Messdaten 28 Bereiche des Sprühfeldsystems 1 identifiziert werden, die bestimmte Eigenschaften aufweisen, beispielsweise bezüglich der Thermik. Die Zonen Z9, Z10 können auf Basis der Messdaten 28 ermittelt, insbesondere durch die Steuervorrichtung 27 oder durch einen externen Server berechnet und/oder durch Simulation und/oder Optimierung ermittelt werden.

Die Stellglieder 20 der jeweiligen Sprühanordnungen 6 in der identifizierten Zone Z9, Z10 können im Folgenden derart eingestellt und/oder geregelt werden, dass der Volumenstrom an Primärmedium 9, der über die jeweilige Sprühanordnung 6 abgegeben wird oder abgebbar ist, nach Zonen Z9, Z10 getrennt gesteuert bzw. geregelt wird.

Beispielsweise kann in der radial äußeren Zone Z10 aufgrund der Wetterbedingungen ein Betrieb mit hohem Wirkungsgrad nicht möglich sein oder die Thermik sollte verbessert werden o. dgl. In der radial inneren Zone Z9 könnte beispielsweise ein effizienter Betrieb bzw. eine effiziente Kühlung unter Berücksichtigung der Messdaten 28, insbesondere der Wetterlage, möglich sein.

Hier kann die Steuervorrichtung 27 die Stellglieder 20 der in dieser Zone Z9 bzw. in diesem Abschnitt des Sprühfeldsystems 1 angeordneten Sprühanordnungen 6 derart steuern, dass die Sprühanordnungen 6 bzw. Stellglieder 20 einen zumindest im Wesentlichen ungedrosselten Volumenstrom an Primärmedium 9 abgeben bzw. abgeben können. Entsprechend können in der radial äußeren Zone Z10 die Sprühanordnungen 6 durch die Steuervorrichtung 27 anders als die die Sprühanordnungen 6 in der radial inneren Zone Z9 gesteuert oder geregelt werden, also bedarfsweise gedrosselt oder deaktiviert werden, beispielsweise wenn ein effizienter Betrieb nicht möglich ist.

Auf diese Weise kann, insbesondere auch unabhängig vom Verlauf der Zuleitungen 7, ein Sprühbild erzeugt werden, das den Messdaten 28 und/oder den Wetterbedingungen außerhalb des Kühlturms 4 und/oder den Bedingungen im Prozessraum 3 Rechnung trägt.

In einem Aspekt der vorliegenden Erfindung werden vorgegebene oder ermittelte Zonen Z1-10 zeitlich und/oder örtlich abwechselnd aktiviert und/oder zu deaktiviert und/oder gedrosselt. Hierbei ist mit aktivieren gemeint, dass die Sprühanordnungen 6 der Zonen Z1-10 derart gesteuert werden, dass die Stellglieder 20 die Abgabe von Primärmedium 9 vollständig zulassen. Deaktiviert bedeutet hingegen, dass die Stellglieder 20 der jeweiligen Sprühanordnungen 6 derart gesteuert werden, dass der abgegebene oder abgebbare Volumenstrom an Primärmedium 9 der in dieser Zone angeordneten Sprühanordnungen 6 gedrosselt oder blockiert wird.

Zur Steuerung oder Erzeugung einer Zone Z1-10 können Sprühanordnungen 6, die mit demselben Abzweigrohr 7B verbunden sind, in unterschiedlicher Weise gesteuert werden.

Hierbei kann vorgesehen sein, dass an unterschiedlichen Abzweigrohren 7B angeordnete Sprühanordnungen 6 derart unterschiedlich gesteuert werden, dass Stellglieder 20 von Sprühanordnungen 6, die benachbart zum Verteilerrohr 7A angeordnet sind, aktiviert sind oder werden, während Sprühanordnungen 6, die vom Verteilerrohr 7A entfernt am Abzweigrohr 7B angeordnet sind, gedrosselt oder deaktiviert sind oder werden.

Bei anderen Abzweigrohren 7B kann das Gegenteil der Fall sein, also dass Sprühanordnungen 6 in unmittelbarer Nachbarschaft zum Verteilerrohr 7A deaktiviert sind oder werden und vom Verteilerrohr 7A weiter beabstandete Sprühanordnungen 6 aktiviert sind oder werden.

Auf diese Weise kann unabhängig von dem Verlauf der Verteilerrohre 7A und/oder Abzweigrohre 7B ein individuelles Sprühbild erzeugt werden. So können unabhängig vom Aufbau bzw. Verlauf der Zuleitung 7 Sprühanordnungen 6 einer der Zonen Z1-10 gemeinsam gesteuert, aktiviert, deaktiviert, gedrosselt oder auf sonstige Weise gesteuert werden.

In vorteilhafter Weise ist es durch die vorliegende Erfindung also möglich, unabhängig oder abweichend vom Verlauf der Zuleitung 7, insbesondere der Verteilerrohre 7A und/oder Abzweigrohre 7B, Abschnitte bzw. Zonen Z1-4 des Sprühfeldsystems 1 zu identifizieren und/oder zu selektieren, in denen Sprühanordnungen 6 in einer bestimmten Weise, beispielsweise gleichartig, gesteuert werden.

In einem weiteren Aspekt der vorliegenden Erfindung ist vorgesehen, dass die Steuervorrichtung 27 eine Datenbank mit vorgegebenen Sprühbildern aufweist, die gewählt werden können, wenn bestimmte Randbedingungen eintreten, also die Messdaten 28 beispielsweise in einem bestimmten Bereich liegen. Die Datenbank kann auch extern realisiert sein.

Alternativ oder zusätzlich kann/können ein oder mehrere Sprühbild-Berechnungsvorschriften vorgesehen bzw. hinterlegt sein, mit denen in Abhängigkeit von den Messdaten 28 oder anderen Vorgaben ein Sprühbild bestimmt, insbesondere berechnet wird oder werden kann. Dies erfolgt vorzugsweise durch die Steuervorrichtung 27.

Die vorgegebenen oder bestimmten Sprühbilder können Erzeugungsvorschriften oder Daten aufweisen, um die Sprühanordnungen 6 des Sprühfeldsystems 1 bzw. der Sprühebene 2 derart zu steuern, dass das Sprühbild resultiert. Insbesondere weist ein Sprühbild korrespondierende Steuerbefehle 36 auf oder ermöglicht deren Bestimmung, sodass durch Übermittelung der Steuerbefehle 36 an die Sprühanordnungen 6 bzw. Stellglieder 20 das Sprühbild erzeugt wird oder erzeugbar ist.

Beispielsweise können Schwellwerte für die Kühlleistung hinterlegt sein, denen bestimmte Sprühbilder zugeordnet sind. Aus einer vorgegebenen oder vorgebbaren Kühlleistung kann dann ein Sprühbild bestimmt, abgerufen, berechnet oder ermittelt werden. Die Steuerung der individuellen Sprühanordnungen 6 erfolgt dann vorzugsweise derart, dass das Sprühbild erzeugt wird.

Das jeweilige Sprühbild kann unter Berücksichtigung der Messdaten 28 in einem Aspekt der vorliegenden Erfindung dynamisch, automatisch, in Echtzeit und/oder nahe Echtzeit angepasst werden.

In einem Aspekt der vorliegenden Erfindung ist es möglich und bevorzugt, dass die Sprühanordnungen 6 bzw. Adapter 21 autark mit Energie versorgt werden. Dies kann durch sogenannte Energy-Harvesting-Technologien erfolgen, bei denen elektrische Energie aus in der Umwelt oder Umgebung verfügbaren Ressourcen gewonnen wird.

Besonders bevorzugt wird hierbei aus dem Primärmedium 9 Energie in elektrischen Strom umgewandelt, um die Stellglieder 20 zu betreiben. Hierbei kann beispielsweise ein Peltierelement eingesetzt werden, das durch eine Temperaturdifferenz zwischen dem aufgeheizten Primärmedium 9 und der kühleren Umgebung der jeweiligen Sprühanordnung 6 elektrische Energie gewinnt. Alternativ oder zusätzlich können die jeweiligen Sprühanordnungen 6 bzw. Adapter 21 aus der Strömung des Primärmediums 9 Energie erzeugen. Hierzu kann ein Propeller, eine Turbine oder eine sonstige Einrichtung vorgesehen sein, um Bewegungsenergie des Primärmediums 9 in elektrische Energie zu wandeln, mit der wiederum das Stellglied 20 betrieben wird oder antreibbar ist.

Die autarke Stromversorgung der Sprühanordnungen 6 bzw. Adapter 21 hat den Vorteil, dass die Nachrüstung von Adaptern 21 bzw. Stellgliedern in bestehende Kühltürme 4 beschleunigt und vereinfacht wird.

Besonders bevorzugt sind sich autark aus dem Primärmedium 9 mit Energie versorgender Adapter 21 bzw. Sprühanordnungen 6, deren Sprühanordnungs-Schnittstellen 38 zur Erzeugung von Funk-Datenverbindungen 39 ausgebildet. Auf diese Weise ist es nicht notwendig, die Sprühanordnungen 6 zu verkabeln. Dies erleichtert ganz maßgeblich die Installation und die Instandhaltung.

Die vorliegende Erfindung wurde anhand eines Naturzug-Kühlturms 4 nach dem Nasskühlungsprinzip näher erläutert. Grundsätzlich kann die Erfindung jedoch auch auf andere Kühltürme 4 angeordnet werden, insbesondere Zellenkühltürme.

Besonders vorteilhaft ist die vorliegende Erfindung jedoch grundsätzlich bei Kühltürmen nach dem Nass-Kühlungsprinzip, bei denen das Primärmedium 9, insbesondere durch Versprühen oder Verregnen, in unmittelbaren Kontakt mit dem Kühlmedium (hier Luft) gebracht wird.

Darüber hinaus sind unterschiedliche Aspekte der vorliegenden Erfindung im Rahmen der nachfolgenden Ansprüche einzeln und in Kombination realisierbar und vorteilhaft.

### Bezugszeichenliste:

| | | | |
|---|---|---|---|
| 1 | Sprühfeldsystem | 34 | Datenbank / Server |
| 2 | Sprühebene | 35 | Steuermodul |
| 3 | Prozessraum | 36 | Steuerbefehl |
| 4 | Kühlturm | 37 | Steuervorrichtungs-Schnittstelle |
| 5 | Außenwand | 38 | Sprühanordnungs-Schnittstelle |
| 6 | Sprühanordnung | 38A | Stecker |
| 7 | Zuleitung | 38B | Buchse |
| 7A | Verteilerrohr | 39 | Datenverbindung |
| 7B | Abzweigrohr | 40 | Knoten |
| 8 | Steigleitung | 41 | Verteiler |
| 9 | Primärmedium | | |
| 10 | Sprühnebel | G1 | Gruppe 1 |
| 11 | Füllkörper | G2 | Gruppe 2 |
| 12 | Zuluft | G3 | Gruppe 3 |
| 13 | Tropfenabscheider | GN | Gruppe N |
| 14 | Auffangeinrichtung | | |
| 15 | Primärmedium-Ablauf | Z1 | Zone |
| 16 | Lufteintrittsöffnung | Z2 | Zone |
| 17 | Abluft | Z3 | Zone |
| 18 | Luftaustrittsöffnung | Z4 | Zone |
| 19 | Steigeschacht | Z5 | Zone |
| 20 | Stellglied | Z6 | Zone |
| 21 | Adapter | Z7 | Zone |
| 22 | Sprühkopf | Z8 | Zone |
| 23 | Abgabeöffnung | Z9 | Zone |
| 24 | erster Verteiler | Z10 | Zone |
| 25 | zweiter Verteiler | | |
| 26 | dritter Verteiler | | |
| 27 | Steuervorrichtung | | |
| 28 | Messdaten | | |
| 29 | Wetterstation | | |
| 30 | Wind | | |
| 31 | Luftsensor | | |
| 32 | Sprühanordnungs-Messwert | | |
| 33 | Kühlwassersensor | | |

## Patentansprüche

1. Sprühfeldsystem (1) für einen Kühlturm (4), vorzugsweise Naturzugkühlturm, wobei das Sprühfeldsystem (1) eine Vielzahl von Sprühanordnungen (6) zur Abgabe von Primärmedium (9), insbesondere Kühlwasser, und eine Zuleitung (7) zur Versorgung der Sprühanordnungen (6) mit dem Primärmedium (9) aufweist,wobei die Sprühanordnungen (6) jeweils ein Stellglied (20) zur Steuerung der Abgabe des Primärmediums (9) aufweisen, wodurch der durch die Sprühanordnungen (6) abgebbare Volumenstrom an Primärmedium (9) für die jeweilige Sprühanordnung (6) individuell einstellbar ist,
**dadurch gekennzeichnet,**
**dass** eine oder mehrere der oder die Sprühanordnungen (6) jeweils eine oder mehrere Messeinrichtungen, insbesondere einen Luftsensor (31) und/oder einen Kühlwassersensor (33), zur Bestimmung von sprühanordnungsbezogenen Sprühanordnungs-Messwerten (32), insbesondere einer Primärmediumtemperatur, eines Primärmediumdrucks und/oder eines Umgebungsluftdrucks der unmittelbaren Umgebung der jeweiligen Sprühanordnung (6), aufweisen.

2. Sprühfeldsystem gemäß Anspruch 1, **dadurch gekennzeichnet, dass** das Sprühfeldsystem (1) eine Steuervorrichtung (27) zur individuellen Steuerung und/oder Regelung der Stellglieder (20) der jeweiligen Sprühanordnungen (6) aufweist.

3. Sprühfeldsystem gemäß Anspruch 2, **dadurch gekennzeichnet, dass** die Steuervorrichtung (27) dazu ausgebildet ist, bevorzugt wetterbezogene, Messdaten (28) zu ermitteln oder zu empfangen und die Stellglieder (20) der Sprühanordnungen (6) auf Basis der Messdaten (28) individuell zu steuern und/oder zu regeln.

4. Sprühfeldsystem gemäß Anspruch 3, **dadurch gekennzeichnet, dass** die Messdaten (28) eine Außentemperatur und/oder eine - insbesondere relative - Luftfeuchtigkeit und/oder einen Luftdruck und/oder eine Windgeschwindigkeit und/oder eine Windrichtung aufweisen oder hierdurch gebildet sind.

5. Sprühfeldsystem gemäß Anspruch 3 oder 4, **dadurch gekennzeichnet, dass** die Steuervorrichtung (27) dazu ausgebildet ist, auf Basis der Messdaten (28) eine Untermenge der Sprühanordnungen (6) zu selektieren, vorzugsweise wobei die Steuervorrichtung (27) dazu ausgebildet ist, die selektierte Untermenge von Sprühanordnungen (6) gleichartig und/oder in einer von den Messdaten (28) abhängigen Weise zu steuern.

6. Sprühfeldsystem gemäß einem der Ansprüche 2 bis 5, **dadurch gekennzeichnet, dass** die Sprühanordnungs-Messwerte (32) an die Steuervorrichtung (27) übermittelbar und/oder wobei die Stellglieder (20) auf Basis oder unter Berücksichtigung der Sprühanordnungs-Messwerte (32) steuerbar und/oder regelbar sind.

7. Sprühfeldsystem gemäß Anspruch 6, **dadurch gekennzeichnet, dass** die Messdaten (28) die Sprühanordnungs-Messwerte (32) aufweisen oder hierdurch gebildet sind.

8. Sprühfeldsystem gemäß einem der Ansprüche 2 bis 7, **dadurch gekennzeichnet, dass** die Steuervorrichtung (27) ein Steuermodul (35) zur Erzeugung von Steuerbefehlen (36), vorzugsweise aus den oder auf Basis der Messdaten (28), aufweist.

9. Sprühfeldsystem gemäß Anspruch 8, **dadurch gekennzeichnet, dass** die Steuervorrichtung (27) eine Steuervorrichtungs-Schnittstelle (37) aufweist, mit der die Steuerbefehle (36) an die Sprühanordnungen (6) übermittelbar sind, und dass die Sprühanordnungen (6) jeweils eine Sprühanordnungs-Schnittstelle (38) aufweisen, mit der die Steuerbefehle (36) von der Steuervorrichtung (27) empfangbar und die Stellglieder (20) steuerbar sind.

10. Sprühfeldsystem gemäß Anspruch 9, **dadurch gekennzeichnet, dass** zwischen der Steuervorrichtungs-Schnittstelle (37) und den Sprühanordnungs-Schnittstellen (38) eine oder mehrere drahtlose und/oder drahtgebundene Datenverbindungen (39) vorgesehen ist/sind, über die die Steuerbefehle (36) von der Steuervorrichtung (27) an die Sprühanordnungen (6) und/oder über die die Sprühanordnungs-Messwerte (32) von den Sprühanordnungen (6) an die Steuervorrichtung (27) übermittelbar sind, vorzugsweise wobei die Sprühanordnungen (6) und die Steuervorrichtung (27) ein Datennetzwerk bilden, insbesondere ein Funk-Netzwerk, und/oder wobei die Datenverbindungen Ad-Hoc-Verbindungen sind oder aufweisen.

11. Kühlturm (4) mit einem Sprühfeldsystem (1) gemäß einem der voranstehenden Ansprüche, vorzugsweise:
wobei die Sprühanordnungen (6) in einer bevorzugt horizontalen Sprühebene (2) und/oder zumindest im Wesentlichen äquidistant angeordnet sind; und/oder wobei bezogen auf die Gravitation unterhalb der Sprühanordnungen (6) Kühlturmeinbauten und/oder oberhalb der Sprühanordnungen (6) Tropfenabscheider (13) angeordnet sind; und/oder
wobei dem Kühlturm (4) mindestens eine Wetterstation (29) zur Messung der wetterbezogenen Messdaten (28) an oder in direkter Umgebung des Kühlturms (4) zugeordnet ist, wobei die Sprühanordnungen (6) mit den Messdaten (28) steuerbar sind.

12. Verfahren zur Steuerung der Abgabe von Primärmedium (9) durch in einem Sprühfeldsystem (1) eines Kühlturms (4), vorzugsweise Naturzugkühlturms, angeordnete Sprühanordnungen (6), wobei die Sprühanordnungen (6) jeweils ein Stellglied (20) zur Steuerung der Abgabe von Primärmedium (9) aufweisen, wodurch ein durch die Sprühanordnungen (6) abgebbarer Volumenstrom an Primärmedium (9) für die jeweilige der Sprühanordnungen (6) individuell einstellbar ist,
**dadurch gekennzeichnet,**
**dass** die Stellglieder (20) in Abhängigkeit von Messdaten (28) gesteuert und/oder geregelt werden, sodass ein durch das Sprühfeldsystem (1) erzeugtes Sprühbild in Abhängigkeit von den Messdaten (28) erzeugt und/oder verändert wird, wobei die Messdaten (28) sprühanordnungsbezogene Sprühanordnungs-Messwerte (32), die mittels Messeinrichtungen der Sprühanordnungen (6) bestimmt werden, aufweisen oder hierdurch gebildet sind.

13. Verfahren nach Anspruch 12, **dadurch gekennzeichnet, dass** auf Basis der Messdaten (28) bei einer Teilmenge der Sprühanordnungen (6) die Abgabe von Primärmedium (9) automatisch und/oder adaptiv aktiviert, deaktiviert und/oder gedrosselt wird.

## Claims

1. Spray field system (1) for a cooling tower (4), preferably a natural draught cooling tower, wherein the spray field system (1) comprises a plurality of spray arrangements (6) for delivering primary medium (9), in particular cooling water, and a supply pipe (7) for supplying the spray arrangements (6) with the primary medium (9), wherein the spray arrangements (6) each comprise an actuator (20) for controlling the delivery of the primary medium (9), whereby the volumetric flow of primary medium (9) deliverable by the spray arrangements (6) is individually adjustable for the respective spray arrangement (6),
**characterized**
**in that** one or more of the spray arrangements (6) each comprise one or more measuring devices, in particular an air sensor (31) and/or a cooling water sensor (33), for determining spray-arrangement-related spray arrangement measurement values (32), in particular a primary medium temperature, a primary medium pressure and/or an ambient air pressure of the immediate surroundings of the respective spray arrangement (6).

2. Spray field system according to claim 1, **characterized in that** the spray field system (1) comprises a control apparatus (27) for individual control and/or regulation of the actuators (20) of the respective spray arrangements (6).

3. Spray field system according to claim 2, **characterized in that** the control apparatus (27) is designed to determine or receive, preferably weather-related, measurement data (28) and to individually control and/or regulate the actuators (20) of the spray arrangements (6) on the basis of the measurement data (28).

4. Spray field system according to claim 3, **characterized in that** the measurement data (28) comprise or are formed by an outside temperature and/or an - in particular relative - air humidity and/or an air pressure and/or a wind speed and/or a wind direction.

5. Spray field system according to claim 3 or 4, **characterized in that** the control apparatus (27) is designed to select a subquantity of spray arrangements (6) on the basis of the measurement data (28), preferably wherein the control apparatus (27) is designed to control the selected subquantity of spray arrangements (6) in a like manner and/or in a function of the measurement data (28).

6. Spray field system according to one of claims 2 to 5, **characterized in that** the spray arrangement measurement values (32) are transmittable to the control apparatus (27) and/or wherein the actuators (20) are controllable and/or regulatable on the basis of or taking into account the spray arrangement measurement values (32)

7. Spray field system according to claim 6, **characterized in that** the measurement data (28) comprise the spray arrangement measurement values (32) or are formed by them.

8. Spray field system according to any one of claims 2 to 7, **characterized in that** the control apparatus (27) comprises a control module (35) for generating control commands (36), preferably from or on the basis of the measurement data (28).

9. Spray field system according to claim 8, **characterized in that** the control device (27) comprises a control apparatus interface (37) with which the control commands (36) are transmittable to the spray arrangements (6), and **in that** the spray arrangements (6) each comprise a spray arrangement interface (38) with which the control commands (36) are receivable from the control device (27) and the actuators (20) are controllable.

10. Spray field system according to claim 9, **characterized in that** one or more wireless and/or wired data connections (39) is/are provided between the control apparatus interface (37) and the spray arrangement interfaces (38), via which the control commands (36) can be transmitted from the control apparatus (27) to the spray arrangements (6) and/or via which the spray arrangement measurement values (32) are transmittable from the spray arrangements (6) to the control apparatus (27), preferably wherein the spray arrangements (6) and the control apparatus (27) form a data network, in particular a radio network, and/or wherein the data connections are or comprise ad hoc connections

11. Cooling tower (4) with a spray field system (1) according to one of the above requirements, preferably:
wherein the spray arrangements (6) are arranged in a preferably horizontal spray level (2) and/or at least substantially equidistant; and/or
wherein cooling tower internals are arranged below the spray arrangements (6) and/or droplet separators (13) are arranged above the spray arrangements (6) with respect to gravity; and/or
wherein at least one weather station (29) for measuring the weather-related measurement data (28) is assigned to the cooling tower (4) at or in the direct vicinity of the cooling tower (4), wherein the spray arrangements (6) are controllable with the measurement data (28).

12. Method for controlling the delivery of primary medium (9) by spray arrangements (6) arranged in a spray field system (1) of a cooling tower (4), preferably a natural draft cooling tower, wherein the spray arrangements (6) each comprise an actuator (20) for controlling the delivery of primary medium (9), whereby a volumetric flow of primary medium (9) deliverable by the spray arrangements (6) is individually adjustable for the respective one of the spray arrangements (6)
**characterized**
**in that** the actuators (20) are controlled and/or regulated as a function of measurement data (28), so that a spray pattern generated by the spray field system (1) is generated and/or changed as a function of the measurement data (28), wherein the measurement data (28) comprise spray arrangement-related spray arrangement measurement values (32), which are determined by means of measuring devices of the spray arrangements (6), or are formed thereby.

13. Method according to claim 12, **characterized in that** on the basis of the measurement data (28) the delivery of primary medium (9) is automatically and/or adaptively activated, deactivated and/or throttled for a partial quantity of the spray arrangements (6).

## Revendications

1. Système de champ de pulvérisation (1) pour une tour de refroidissement (4), de préférence une tour de refroidissement à tirage naturel, le système de champ de pulvérisation (1) comportant une pluralité de dispositions de pulvérisation (6) pour l'alimentation en fluide primaire (9), en particulier en eau de refroidissement, et une alimentation (7) pour l'alimentation des dispositions de pulvérisation (6) en fluide primaire (9), les dispositions de pulvérisation (6) ayant chacune un actionneur (20) pour commander la distribution du milieu primaire (9), par ce que le débit volumique du milieu primaire (9) qui peut être distribué par les dispositions de pulvérisation (6) étant réglable individuellement pour la disposition de pulvérisation respective (6),
**caractérisé en ce**
**qu'**un ou plusieurs des dispositions de pulvérisation (6) comportent chacun un ou plusieurs dispositifs de mesure, en particulier un capteur d'air (31) et/ou un capteur d'eau de refroidissement (33), pour déterminer des valeurs de mesure (32) associées à la disposition de pulvérisation, en particulier une température de fluide primaire, une pression de fluide primaire et/ou une pression d'air ambiant de l'environnement immédiat de la disposition de pulvérisation respective (6).

2. Système de champ de pulvérisation selon la revendication 1, **caractérisé en ce que** le système de champ de pulvérisation (1) comprend un dispositif de commande (27) pour la commande et/ou la régulation individuelle des actionneurs (20) des dispositions de pulvérisation respectives (6).

3. Système de champ de pulvérisation selon la revendication 2, **caractérisé en ce que** le dispositif de commande (27) est adapté pour déterminer ou recevoir des données de mesure (28), de préférence liées aux conditions météorologiques, et pour commander et/ou réguler individuellement les actionneurs (20) des dispositions de pulvérisation (6) sur la base des données de mesure (28).

4. Système de champ de pulvérisation selon la revendication 3, **caractérisé en ce que** les données de mesure (28) comprennent ou sont formées par une température extérieure et/ou une humidité de l'air - en particulier relative - et/ou une pression atmosphérique et/ou une vitesse et/ou une direction du vent.

5. Système de champ de pulvérisation selon la revendication 3 ou 4, **caractérisé en ce que** le dispositif de commande (27) est adapté pour sélectionner un sous-ensemble de dispositions de pulvérisation (6) sur la base des données de mesure (28), de préférence dans lequel le dispositif de commande (27) est adapté pour commander le sous-ensemble sélectionné de dispositions de pulvérisation (6) de la même manière et/ou d'une manière dépendant des données de mesure (28).

6. Système de champ de pulvérisation selon l'une des revendications 2 à 5, **caractérisé en ce que** les valeurs de mesure (32) associées à la disposition de pulvérisation peuvent être transmises au dispositif de commande (27) et/ou les actionneurs (20) peuvent être commandés et/ou régulés sur la base ou en tenant compte des valeurs de mesure (32) associées à la disposition de pulvérisation.

7. Système de champ de pulvérisation selon la revendication 6, **caractérisé en ce que** les données mesurées (28) comprennent les valeurs de mesure (32) associées à la disposition de pulvérisation ou sont formées par celles-ci.

8. Système de champ de pulvérisation selon l'une des revendications 2 à 7, **caractérisé en ce que** le dispositif de commande (27) comprend un module de commande (35) pour générer des ordres de commande (36), de préférence à partir ou sur la base des données mesurées (28).

9. Système de champ de pulvérisation selon la revendication 8, **caractérisé en ce que** le dispositif de commande (27) présente une interface de dispositif de commande (37) avec laquelle les ordres de commande (36) peuvent être transmis aux dispositions de pulvérisation (6), et **en ce que** les dispositions de pulvérisation (6) présentent chacune une interface de disposition de pulvérisation (38) avec laquelle les ordres de commande (36) peuvent être reçus du dispositif de commande (27) et les actionneurs (20) peuvent être commandés.

10. Système de champ de pulvérisation selon la revendication 9, **caractérisé en ce qu'**une ou plusieurs connexions de données sans fil et/ou câblées (39) est/sont prévue(s) entre l'interface du dispositif de commande (37) et les interfaces du disposition de pulvérisation (38), par laquelle/lesquelles les ordres de commande (36) peuvent être transmis du dispositif de commande (27) aux dispositions de pulvérisation (6) et/ou par laquelle/lesquelles les valeurs de mesure (32) associées à la disposition de pulvérisation peuvent être transmises des dispositions de pulvérisation (6) au dispositif de commande (27), de préférence les dispositions de pulvérisation (6) et le dispositif de commande (27) formant un réseau de données, en particulier un réseau radio, et/ou les connexions de données étant ou ayant des connexions ad hoc.

11. Tour de refroidissement (4) avec un système de champ de pulvérisation (1) selon l'une des revendications ci-dessus, de préférence:
dans lequel les dispositions de pulvérisation (6) sont disposées dans un plan de pulvérisation (2) de préférence horizontal et/ou au moins sensiblement équidistant; et/ou
dans lequel les installations internes de la tour de refroidissement sont disposées en dessous des dispositions de pulvérisation (6) et/ou les séparateurs de gouttelettes (13) sont disposés au-dessus des dispositions de pulvérisation (6) par rapport à la gravité; et/ou
dans lequel au moins une station météorologique (29) pour la mesure des données de mesure (28) liées au temps est associée à la tour de refroidissement (4) sur ou à proximité directe de la tour de refroidissement (4), les dispositions de pulvérisation (6) pouvant être commandées avec les données de mesure (28).

12. Procédé pour commander la distribution d'un milieu primaire (9) par des dispositions de pulvérisation (6) disposées dans un système de champ de pulvérisation (1) d'une tour de refroidissement (4), de préférence une tour de refroidissement à tirage naturel, dans lequel les dispositions de pulvérisation (6) ont chacune un actionneur (20) pour commander la distribution du milieu primaire (9), par ce qu'un débit volumique de milieu primaire (9) qui peut être distribué par les dispositions de pulvérisation (6) peut être ajusté individuellement pour la disposition respective des dispositions de pulvérisation (6),
**caractérisé en ce**
**que** les actionneurs (20) sont commandés et/ou réglés en fonction de données de mesure (28), de sorte qu'une image de pulvérisation produite par le système de champ de pulvérisation (1) est générée et/ou modifiée en fonction des données de mesure (28), les données de mesure (28) présentant des valeurs de mesure (32) associées à la disposition de pulvérisation relatives aux dispositions de pulvérisation, qui sont déterminées au moyen de dispositifs de mesure des dispositions de pulvérisation (6) ou sont formées par celles-ci.

13. Procédé selon la revendication 12, **caractérisé en ce que**, sur la base des données de mesure (28), la distribution du milieu primaire (9) est automatiquement et/ou de manière adaptative activée, désactivée et/ou étranglée dans un sous-ensemble des dispositions de pulvérisation (6).
